(19) Europäisches Patentamt
European Patent Office
Office européen des brevets

(11) **EP 3 671 250 B1**

(12) **FASCICULE DE BREVET EUROPEEN**

(45) Date de publication et mention
de la délivrance du brevet:
**07.02.2024 Bulletin 2024/06**

(21) Numéro de dépôt: **19218951.2**

(22) Date de dépôt: **20.12.2019**

(51) Classification Internationale des Brevets (IPC):
**G01S 3/48** *(2006.01)*     **G01S 3/04** *(2006.01)*

(52) Classification Coopérative des Brevets (CPC):
**G01S 3/48; G01S 3/043**

(54) **INTERFÉROMÈTRE NUMÉRIQUE À SOUS-ÉCHANTILLONNAGE**

DIGITALES INTERFEROMETER MIT UNTERABTASTUNG

DIGITAL INTERFEROMETER WITH SUB-SAMPLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873938**

(43) Date de publication de la demande:
**24.06.2020 Bulletin 2020/26**

(73) Titulaire: **Thales**
**92400 Courbevoie (FR)**

(72) Inventeur: **LE MEUR, Anne**
**78851 Elancourt (FR)**

(74) Mandataire: **Lavoix**
**2, place d'Estienne d'Orves**
**75441 Paris Cedex 09 (FR)**

(56) Documents cités:
**FR-A1- 3 009 912     FR-A1- 3 020 157**
**FR-A1- 3 046 250**

• **MCLEAN R F ET AL: "Nyquist-overcoming the limitations", JOURNAL OF SOUND AND VIBRATION, ELSEVIER, AMSTERDAM, NL, vol. 280, no. 1-2, 7 février 2005 (2005-02-07), pages 1-20, XP004701474, ISSN: 0022-460X, DOI: 10.1016/J.JSV.2003.11.047**

**Description**

DOMAINE DE L'INVENTION

La présente invention concerne un procédé de détermination de la situation de parasitage d'un signal dans un récepteur numérique à sous-échantillonnage. La présente invention se rapporte également à un produit programme d'ordinateur, un support d'informations et un goniomètre associés.

ARRIÈRE-PLAN TECHNOLOGIQUE

L'invention concerne le domaine de la réception large bande de signaux électromagnétiques. Plus précisément, la présente invention se rapporte à un récepteur numérique large bande de signaux électromagnétiques. Ces récepteurs sont généralement des goniomètres. Quand la précision angulaire est exigée, ces goniomètres sont des interféromètres, c'est-à-dire des goniomètres basés sur la perception d'un signal radioélectrique incident par un ensemble d'antennes à diversité d'espace.

Les signaux d'intérêt pour ces dispositifs se trouvant à des fréquences porteuses très variées, la bande de fréquence à recevoir est très élevée.

Echantillonner cette bande en respectant le critère de Shannon s'avère difficile car cela implique des composants de conversion analogiques numériques ultra rapides, qui ne satisfont pas les contraintes de poids / volume / consommation, quand lesdits composants ne sont pas complètement inaccessibles avec les technologies actuelles pour les largeurs de bande que l'on cherche à traiter. De plus, si de tels composants existaient, ils généreraient un flux de données numériques qui serait incompatible avec les débits des bus de transfert de données et avec les capacités de traitement des calculateurs actuels utilisés pour réaliser les modules de traitement numérique du signal.

Pour résoudre ce problème, on utilise un récepteur numérique d'un genre nouveau effectuant plusieurs échantillonnages à des fréquences d'échantillonnage très inférieures à la fréquence de Nyquist (égale au double de la bande de fréquence pour des signaux réels).

Ce sous-échantillonnage a l'avantage de lever les contraintes sur la conversion analogique numérique, mais provoque le repliement de la bande de réception dans la bande de Nyquist de travail. Une fréquence mesurée dans cette zone de Nyquist est donc ambiguë : un choix judicieux du nombre et des valeurs des fréquences d'échantillonnage permet de lever ces ambiguïtés.

Une autre conséquence du repliement est que deux (ou plus) signaux présents en même temps à des fréquences différentes dans la bande de réception peuvent se retrouver à des fréquences identiques ou proches dans la zone de Nyquist de travail. Cette situation de mélange est appelée parasitage. Cela se produit lorsque deux signaux simultanés ont des fréquences porteuses dont la différence ou la somme est un multiple d'une des fréquences d'échantillonnage.

Dans la suite, lorsqu'on examinera une fréquence donnée dans la bande de réception, un signal d'intérêt présent à cette fréquence sera appelé signal utile. Un éventuel signal simultané présent à une fréquence dont la somme ou la différence avec la fréquence du signal utile est un multiple d'une des fréquences d'échantillonnage sera appelé signal parasite. Lorsque la fréquence du signal parasite sera examinée à son tour, le signal parasite deviendra signal utile, et le signal précédemment appelé signal utile sera considéré comme un signal parasite.

Ces mélanges dus au repliement spectral rendent difficiles l'élaboration d'un test de détection (présence ou absence de signal utile), dont la fausse alarme doit être maîtrisée. De plus, le signal résultant du mélange d'un signal utile avec un parasite non détecté sera mal caractérisé, ce qui peut fausser les pistes attendues, voire créer de fausses pistes. Ces mélanges ne peuvent pas être négligés, d'autant plus qu'ils sont beaucoup plus fréquents que les vrais mélanges dans la bande de réception.

La demande de brevet FR 3020157 concerne un procédé de détection passive mis en oeuvre par un dispositif comprenant un ou plusieurs capteurs, ledit procédé comportant une étape d'échantillonnage des signaux reçus sur chaque capteur à l'aide de différentes valeurs de fréquence d'échantillonnage sub-Shannon, une étape de transformation des signaux échantillonnés dans le domaine fréquentiel par transformée de Fourier discrète, le pas fréquentiel ΔF étant choisi constant, et pour chaque case temps/fréquence, une étape de calcul de la puissance normalisée dans chaque voie de réception, une étape de calcul de la somme quadratique des puissances calculées en tenant compte de la puissance d'un parasite éventuel, et une étape de seuillage de façon à assurer une probabilité de fausse alarme donnée.

RESUME DE L'INVENTION

Il existe donc un besoin pour un procédé permettant de détecter les situations de parasitage dans un récepteur numérique à sous-échantillonnage.

À cet effet, la présente description porte sur un procédé de détermination des situations de parasitage dû au repliement spectral dans un récepteur numérique large bande selon la revendication 1.

Selon des modes de réalisation particuliers, le procédé présente une ou plusieurs des caractéristiques suivantes, prise(s) isolément ou selon toutes les combinaisons techniquement possibles les caractéristiques additionnelles des revendications 2 à 7.

La présente description concerne également un interféromètre selon la revendication 8.

La présente description décrit aussi à programme d'ordinateur selon la revendication 9.

La présente description décrit également un support lisible par ordinateur selon la revendication 10.

BRÈVE DESCRIPTION DES DESSINS

Des caractéristiques et avantages de l'invention apparaîtront à la lecture de la description qui va suivre, donnée uniquement à titre d'exemple non limitatif, et faite en référence aux dessins annexés, pour lesquels :

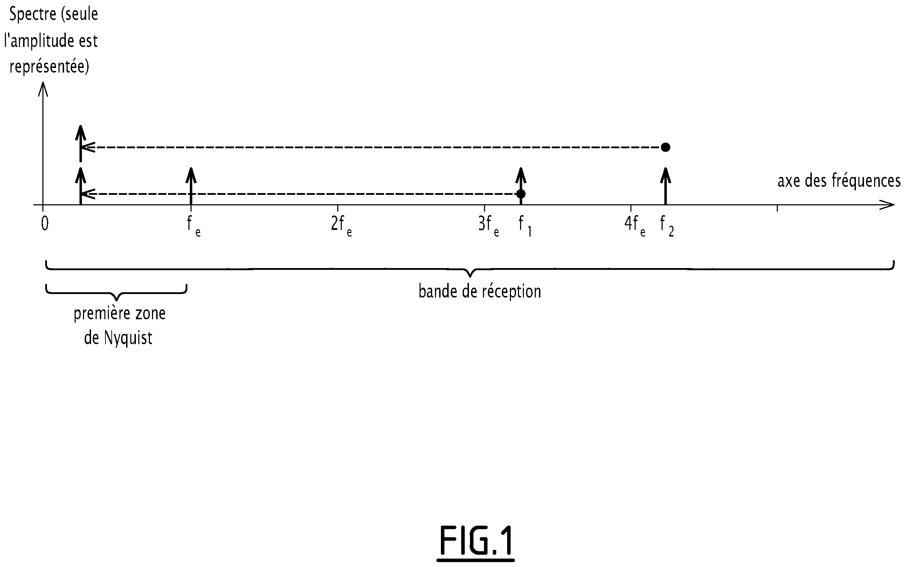

- la figure 1 est une illustration du problème du parasitage posé ;
- la figure 2 est une vue schématique d'un exemple d'interféromètre comportant un calculateur ;
- la figure 3 est une représentation graphique d'un exemple de grille temps/fréquence ;
- la figure 4 est une représentation du signal utile dans une grille temps/fréquence ;
- la figure 5 est une représentation schématique de deux grilles temps/fréquence associées à deux fréquences d'échantillonnage différentes, et contenant un même signal incident ;

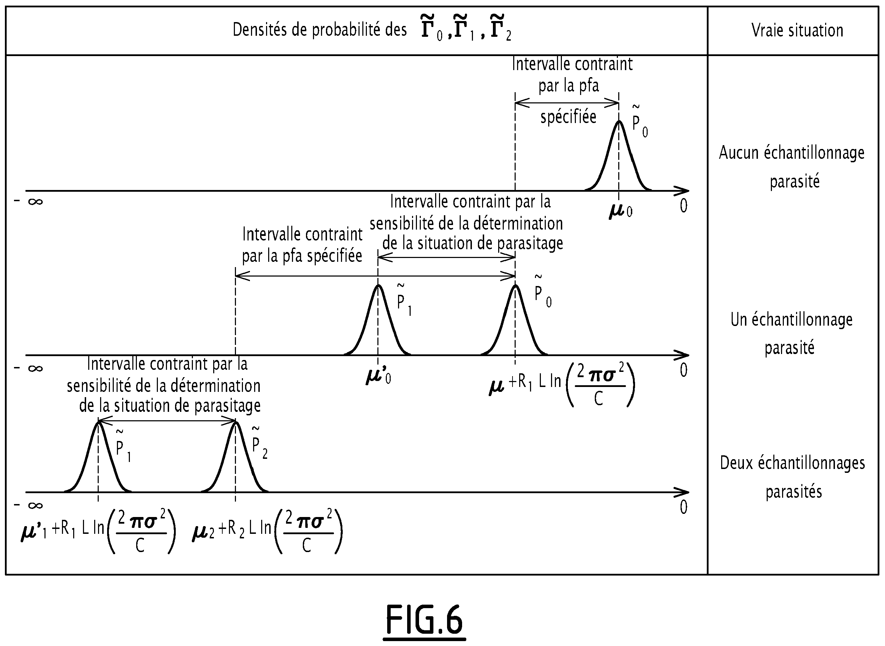

- la figure 6 est une illustration d'un exemple de mise en oeuvre d'une des étapes du procédé de détermination de la situation de parasitage, et

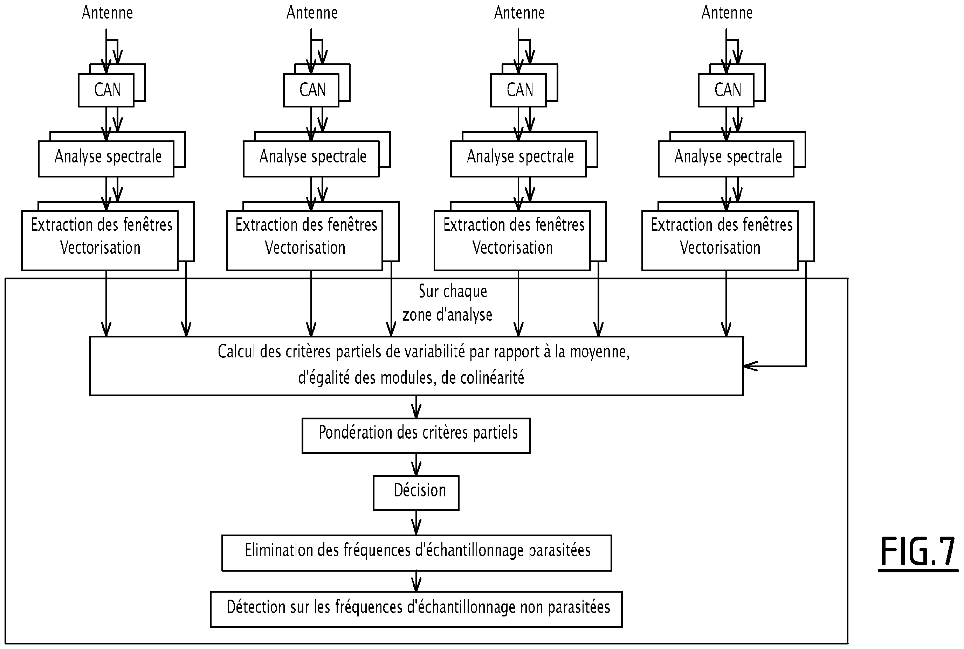

- la figure 7 est une illustration d'un exemple de mise en oeuvre des étapes du procédé.

CAS MONOPOLARISATION

Avant de décrire plus précisément plusieurs modes de réalisation de manière détaillée, il est expliqué rapidement la démarche inventive suivie par le demandeur en partant d'abord du besoin.

Un besoin est de disposer d'une fonction de détection enrichie, permettant de déterminer non seulement s'il y a présence ou absence de signal utile à une fréquence donnée, mais aussi dans quelle situation de parasitage on se trouve (absence de parasites, ou présence de parasites, et quelles sont les fréquences d'échantillonnages), avec le moins d'erreur possible. Dans le cas où le nombre de fréquences d'échantillonnages parasitées est égal à M, et le nombre de fréquences d'échantillonnage est strictement supérieur à $M - 2$, on cherchera seulement à savoir qu'on se trouve dans cette situation (sans chercher à savoir quelles sont les voies parasitées), également avec le moins d'erreur possible.

Cela permettra d'améliorer les performances de la détection elle-même, mais aussi des autres fonctions de la chaîne de traitement (estimation de la direction d'arrivée, caractérisation du signal). Un autre avantage est que cela permettra d'utiliser des composants de conversion analogique-numérique fonctionnant à des fréquences plus faibles que la fréquence de Nyquist, tout en minimisant les effets du repliement spectral.

La littérature qui traite de la détection suppose en général que le signal reçu est seul dans son environnement, et n'aborde pas la problématique du parasitage, c'est-à-dire des interférences entre signaux dues au repliement spectral.

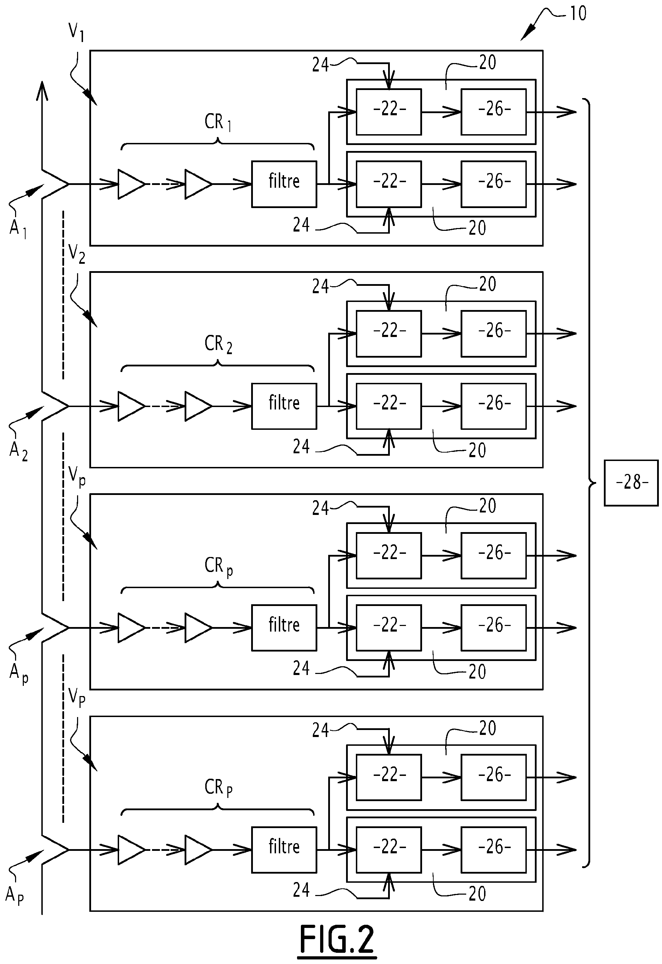

Il est proposé d'utiliser l'architecture du récepteur présenté à la figure 2, dans le cas général de plusieurs fréquences d'échantillonnage par antenne.

Cette architecture est celle d'un interféromètre à large bande instantanée, à réception numérique à sous-échantillonnage. L'interféromètre est constitué de P antennes très large bande ; chacune de ces antennes est connectée à l'entrée d'une chaîne de réception large bande instantanée, réalisée de manière analogique. Chaque chaîne de réception analogique délivre en sortie son signal à au moins un module de réception numérique, constitué d'un module de conversion analogique-numérique suivi d'un module de traitement numérique du signal apte à effectuer une analyse spectrale. L'ensemble des modules de conversion analogique-numérique utilise un ensemble de M fréquences d'échantillonnage différentes et inférieures à la fréquence de Nyquist. Une même fréquence d'échantillonnage peut être utilisée plusieurs fois, mais nécessairement en association avec des modules de conversion analogique-numérique correspondant à des antennes différentes.

Il est appelé voie de réception l'ensemble formé par un module de réception numérique et la chaîne de réception analogique à laquelle il est associé.

Comme expliqué précédemment, le problème rencontré avec le sous-échantillonnage est que deux signaux superposés temporellement peuvent également, par repliement spectral, se superposer fréquentiellement dans la zone de Nyquist de travail, bien que cette superposition n'existe pas dans la bande de réception. S'intéressant à l'un des deux signaux, le terme de « parasitage dudit signal dû au repliement spectral » peut être utilisé. Le problème touche les deux signaux par réciprocité.

Il n'est pas proposé de traiter le cas des signaux de fréquences suffisamment voisines à l'origine dans la bande de réception, qui y sont donc non résolus en fréquence (cf. vrais mélanges). Ce cas est toutefois de probabilité bien plus faible que celle des cas traités.

Le procédé proposé a pour but de déterminer, en fonction des mesures, la situation de parasitage dû au repliement spectral (absence ou présence de parasités, et, en cas de présence de parasites quelles sont les fréquences d'échantillonnage parasitées).

Dans la mesure où l'on admet qu'il n'y a pas plus de deux fréquences d'échantillonnage parmi $M$ affectées par un parasitage du signal, le nombre de situations de parasitage possibles vaut $\frac{M^2+M+2}{2}$ (1 pour aucune fréquence parasitée, $M$ pour une seule fréquence parasitée et $\frac{M(M-1)}{2}$ pour deux fréquences parasitées).

Le demandeur propose d'exploiter le fait que les signaux d'intérêt sont généralement étalés dans plusieurs canaux d'analyse spectrale adjacents et présents dans plusieurs analyses spectrales successives, et modélise les mesures extraites sur plusieurs canaux adjacents et plusieurs analyses successives sous forme vectorielle.

Une idée du demandeur est notamment d'approximer, pour chaque situation de parasitage possible, la vraisemblance des vecteurs de mesures par un majorant calculable uniquement au moyen de modules carrés, de produits scalaires et de filtrage des vecteurs de mesures prélevées sur l'ensemble des voies de réception, et interprétable comme la somme de trois critères traduisant respectivement leur variabilité, l'égalité de leur module et leur colinéarité.

Le procédé proposé détermine la situation de parasitage (absence ou présence de parasites, et en cas de parasitage, les fréquences d'échantillonnage affectées), en maximisant, sur toutes les situations de parasitage possible, l'approximation préalablement obtenue, ou en maximisant son adéquation à sa loi supposée gaussienne.

La situation de parasitage étant connue, le procédé élimine ensuite les voies parasitées et exploite uniquement les voies non parasitées pour décider s'il y a présence ou absence de signal utile en mettant en oeuvre une méthode de détection conventionnelle sur bruit thermique.

De manière synthétique, il est possible d'exprimer l'invention comme un procédé de détermination des situations de parasitage dues au repliement spectral et procédé de détection de signaux électromagnétiques mis en oeuvre au moyen d'un réseau, à $P$ antennes à bande large, $P$ étant un entier supérieur ou égal à 1, chaque antenne étant suivie d'une chaîne de réception analogique et d'un ou plusieurs modules de réception numérique, le nombre de modules de réception numérique étant R au total, ledit procédé comprenant :

- une étape d'échantillonnage des signaux délivrés par l'ensemble des chaînes de réception, à l'aide de $M$ fréquences d'échantillonnage $fe_m$ différentes, inférieures à la fréquence de Nyquist-Shannon, $m$ allant de 1 à $M$, et $M$ étant un entier supérieur ou égal à 4, le nombre de modules de réception numérique fonctionnant avec une fréquence d'échantillonnage $fe_m$ étant égal à $R_m$, et le nombre de modules de réception numérique pour une antenne $p$ étant $Q_p$, avec $R = \sum_{m=1}^{N} R_m = \sum_{p=1}^{P} Q_p$.

- sur chaque module de réception numérique, une étape d'analyse spectrale par des transformées de Fourier discrètes successives, et synchrones sur tous les modules de réception numérique, des $N_m$ échantillons procurés par l'échantillonnage à la fréquence $fe_m$ pendant des intervalles de temps de durée $\Delta T$ éventuellement recouvrants, permettant d'obtenir, sur chacun des $R$ modules de réception numérique, une représentation temps/fréquence appelée grille, de résolution temporelle $\Delta T$ commune à tous les modules de réception numérique, et de résolution fréquentielle $\Delta F$ commune à tous les modules de réception numérique, chaque élément de la grille étant appelé case temps/fréquence et contenant une grandeur complexe appelée mesure,

- une étape, réalisable hors ligne, de mise en correspondance des fréquences dans la bande de réception à la résolution $\Delta F$ avec les fréquences de la bande de Nyquist de chacun des R modules de réception numérique,

- une étape de découpage de l'espace temps/fréquence (dans la bande de réception) en un ensemble de domaines temps/fréquence éventuellement recouvrants, perçus dans les $R$ modules de réception numérique comme $R$ fenêtres superposables, chacune des fenêtres étant composée de $L$ cases temps/fréquence connexes.

- pour chaque domaine temps/fréquence, une étape de transformation des mesures prélevées dans chacune des $R$ fenêtres sous forme de $R$ vecteurs de dimension $L \times 1$ notés $Y_{pm}$, où $p$ est l'indice du capteur et $m$ l'indice de l'échantillonnage,

- pour chaque domaine temps/fréquence, une étape de détermination de la présence de parasites éventuels consistant à choisir, parmi les hypothèses suivantes:

  • $H_0$ : absence de parasite,
  • $H_{m0}$ : présence de un parasite (ou plus) sur l'échantillonnage $m_0$, avec $m_0 \in [1, M]$ (soit $M$ hypothèses),
  • $H_{m0,m1}$ : présence de un parasite (ou plus) sur l'échantillonnages $m_0$ et de un parasite (ou plus) sur l'échan-

tillonnage $m_1$, avec $m_0 \in [1, M]$, $m_1 \in [1, M]$, $m_0 \neq m_1$ (soit $M(M - 1)/2$ hypothèses),

celle maximisant une approximation de la densité de probabilité des $R$ vecteurs de mesures $Y_{pm}$ calculable uniquement à l'aide de modules carrés, de produits scalaires et de moyennes des mesures, cette approximation résultant :

- d'une modélisation des vecteurs de mesures $Y_{pm}$ supposés non parasités par des échantillons indépendants d'une variable aléatoire vectorielle complexe de dimension $L$, de densité de probabilité gaussienne de moyenne $Ae^{i\varphi_p}$ et de covariance $2\sigma^2 I_L$, où $A$ est le vecteur complexe de dimension $L$ représentant le signal utile, $\varphi_p$ le déphasage interférométrique, $2\sigma^2$ la puissance du bruit dans une case temps/fréquence, et $I_L$ la matrice identité de dimension $L \times L$,
- d'une modélisation des vecteurs de mesures $Y_{pm}$ supposés parasités par des vecteurs complexes de dimension $L$, où les composantes de ces vecteurs sont des échantillons indépendants d'une variable aléatoire complexe centrée à composantes réelle et imaginaire indépendantes et uniformément distribuées sur un intervalle de largeur $\sqrt{C}$ de telle sorte que la densité de probabilité des vecteurs de mesures sera $(1/C)^L$, puis
- d'une majoration de la densité de probabilité des $R$ vecteurs de mesures $Y_{pm}$,

l'approximation ainsi obtenue étant égale à la somme d'un terme jouant le rôle de pénalité pour les $Y_{pm}$ supposés parasitées, et d'un terme provenant de la densité de probabilité des $Y_{pm}$ supposés non parasités, lui-même décomposable en trois critères partiels :

- un critère de non-variabilité des $Y_{pm}$ par rapport à leur valeur filtrée sur les différentes fréquences d'échantillonnage fonctionnant avec l'antenne $p$ (hormis la ou les fréquences d'échantillonnage supposées parasitées dans l'hypothèse considérée),
- un critère d'égalité des modules des $Y_{pm}$ filtrés sur les différentes fréquences d'échantillonnage fonctionnant avec l'antenne $p$ (hormis la ou les fréquences d'échantillonnage supposées parasitées dans l'hypothèse considérée), et
- un critère de colinéarité des $Y_{pm}$ filtrés sur les différentes fréquences d'échantillonnage fonctionnant avec l'antenne $p$ (hormis la ou les fréquences d'échantillonnage supposées parasitées dans l'hypothèse considérée),

- sur chaque domaine temps/fréquence, une étape de détection de la présence de signal utile, les mesures contenant des parasites ayant été éliminées.

Suivant des modes de réalisations spécifiques, le procédé comporte l'une des caractéristiques suivantes prises isolément ou en combinaison :

- à l'étape de détermination de la situation de parasitage, les approximations à calculer sont les suivantes, pour les différentes hypothèses :
Pour l'hypothèse $H_0$ (aucun parasite présent), la grandeur $\hat{\Gamma}_0$, notée aussi $\tilde{\Gamma}_0$ :

$$\hat{\Gamma}_0 = \frac{1}{2\sigma^2}\gamma_0^{var} + \frac{R}{2\sigma^2}\left(\gamma_0^{mod} + \gamma_0^{col}\right),$$

où :

$$\gamma_0^{var} = -\sum_{p,m}\left\|\tilde{Y}_{pm}\right\|^2, \gamma_0^{mod} = \left(\sum_p \alpha_p \|Z_p\|\right)^2 - \sum_p \alpha_p \|Z_p\|^2, \gamma_0^{col} = 2\sum_{p<q} \alpha_p \alpha_q \left(\left|Z_p^* Z_q\right| - \|Z_p\|\|Z_q\|\right),$$

où $\alpha_p = \dfrac{Q_p}{R}$, où $Z_p$ est la moyenne des vecteurs $Y_{pm}$ sur les modules de réception associées à une même antenne $p : Z_p = \dfrac{1}{Q_p}\sum_m Y_{pm}$,

où $\tilde{Y}_{pm}$ est l'écart d'un vecteur $Y_{pm}$ par rapport à la moyenne $Z_p$.

Pour les hypothèses $H_{m_0}$ (un parasite ou plus présent sur la fréquence d'échantillonnage $m_0$), les grandeurs $\hat{\Gamma}_{m_0}$ :

$$\hat{\Gamma}_{m_0} = R_{m_0} L \ln\left(\frac{2\pi\sigma^2}{C}\right) + \tilde{\Gamma}_{m_0},$$

où $\hat{\Gamma}_{m_0}$ est défini par :

$$\tilde{\Gamma}_{m_0} = \frac{1}{2\sigma^2}\gamma_{m_0}^{var} + \frac{R}{2\sigma^2}\left(\gamma_{m_0}^{mod} + \gamma_{m_0}^{col}\right),$$

où :

$$\gamma_{m_0}^{var} = -\sum_{\substack{p,m \\ m \neq m_0}}\left\|\tilde{Y}_{pm}\right\|^2, \gamma_{m_0}^{mod} = \left(\sum_p \alpha_{pm_0}\left\|Z_{pm_0}\right\|\right)^2 - \sum_p \alpha_{pm_0}\left\|Z_{pm_0}\right\|^2,$$

$$\gamma_{m_0}^{col} = 2\sum_{p<q}\alpha_{pm_0}\alpha_{qm_0}\left(\left|Z_{pm_0}^*Z_{qm_0}\right| - \left\|Z_{pm_0}\right\|\left\|Z_{qm_0}\right\|\right),$$

où $R_{m_0}$ le nombre de modules de réception fonctionnant avec la fréquence $f_{m_0}$

où

$$\alpha_{pm_0} = \frac{Q_{pm_0}}{R - R_{m_0}}$$

où $Q_{pm_0}$ est le nombre de modules de réception de l'antenne p, qui ne fonctionnent pas avec la fréquence d'échantillonnage $fe_{m_0}$

où

$$Z_{pm_0} = \frac{1}{Q_{pm_0}}\sum_{m \neq m_0} Y_{pm}$$

où $\tilde{Y}_{pm}$ est l'écart d'un vecteur $Y_{pm}$ par rapport à la moyenne $Z_{pm_0}$.

Pour les hypothèses $H_{m_0,m_1}$ (un parasite ou plus présent sur la fréquence d'échantillonnage $m_0$ et un parasite (ou plus) présent sur la fréquence d'échantillonnage $m_1$), les grandeurs $\hat{\Gamma}_{m_0 m_1}$ :

$$\hat{\Gamma}_{m_0 m_1} = R_{m_0 m_1} L \ln\left(\frac{2\pi\sigma^2}{C}\right) + \tilde{\Gamma}_{m_0 m_1} \text{ où } \tilde{\Gamma}_{m_0 m_1}$$

est défini par :

$$\tilde{\Gamma}_{m_0 m_1} = \frac{1}{2\sigma^2}\gamma_{m_0 m_1}^{var} + \frac{R}{2\sigma^2}\left(\gamma_{m_0 m_1}^{mod} + \gamma_{m_0 m_1}^{col}\right),$$

où :

$$\gamma_{m_0 m_1}^{var} = -\sum_{\substack{p,m \\ m \neq m_0,m_1}}\left\|\tilde{Y}_{pm}\right\|^2, \gamma_{m_0 m_1}^{mod} = \left(\sum_p \alpha_{pm_0 m_1}\left\|Z_{pm_0 m_1}\right\|\right)^2 - \sum_p \alpha_{pm_0 m_1}\left\|Z_{pm_0 m_1}\right\|^2,$$

$$\gamma_{m_0 m_1}^{col} = 2\sum_{p<q}\alpha_{pm_0 m_1}\alpha_{qm_0 m_1}\left(\left|Z_{pm_0 m_1}^*Z_{qm_0 m_1}\right| - \left\|Z_{pm_0 m_1}\right\|\left\|Z_{qm_0 m_1}\right\|\right),$$

où $R_{m_0 m_1}$ est le nombre de modules de réception fonctionnant avec la fréquence $fe_{m_0}$ ou avec la fréquence $fe_{m_1}$

$$\alpha_{pm_0 m_1} = \frac{Q_{pm_0 m_1}}{R - R_{m_0,m_1}};$$

où ,

$$Z_{pm_0 m_1} = \frac{1}{Q_{pm_0 m_1}} \sum_{m \neq m_0, m_1} Y_{pm},$$

où ,

où $Q_{pm_0 m_1}$ est le nombre de modules de réception numérique rattachés à l'antenne d'indice $p$ qui ne fonctionnent ni avec la fréquence d'échantillonnage $fe_{m_0}$, ni avec la fréquence d'échantillonnage $fe_{m_1}$,

où $\tilde{Y}_{pm}$ est l'écart d'un vecteur $Y_{pm}$ par rapport à la moyenne $Z_{pm_0 m_1}$.

- dans un premier mode de réalisation, le procédé comporte les déductions suivantes :

si $\hat{\Gamma}_0 = \max(\hat{\Gamma}_0, \hat{\Gamma}_{m_0}, \hat{\Gamma}_{m_0,m_1})$, alors il y a absence de parasite (hypothèse $H_0$).

S'il existe $\hat{m}_0$ tel que $\hat{\Gamma}_0 = \max(\hat{\Gamma}_0, \hat{\Gamma}_{m_0}, \hat{\Gamma}_{m_0,m_1})$, alors il y a une seule fréquence d'échantillonnage parasitée, et cette fréquence d'échantillonnage est $\hat{m}_0$ (hypothèse $H_{\hat{m}_0}$).

s'il existe un couple $\hat{m}_0, \hat{m}_1$ tel que $\hat{\Gamma}_{\hat{m}_0,m_1} = \max(\hat{\Gamma}_0, \hat{\Gamma}_{m_0}, \hat{\Gamma}_{m_0,m_1})$, alors il y a deux fréquences d'échantillonnage parasitées, et ces fréquences sont $\hat{m}_0$ et $\hat{m}_1$ (hypothèse $H_{\hat{m}_0 \hat{m}_1}$).

- dans un deuxième mode de réalisation, le procédé comporte une étape de calcul de :

$$\widetilde{\boldsymbol{\Gamma}}_0 = \tilde{\Gamma}_0$$

$$\widetilde{\boldsymbol{\Gamma}}_1 = \max_{m_0 = 1,\ldots,M} \left( \tilde{\Gamma}_{m_0} \right)$$

$$\widetilde{\boldsymbol{\Gamma}}_2 = \max_{\substack{m_0 = 1,\ldots,M \\ m_1 = 1,\ldots,M \\ m_0 \neq m_1}} \left( \tilde{\Gamma}_{m_0 m_1} \right)$$

où :

- $\tilde{\Gamma}_0$ représente l'hypothèse « absence de parasite ». Cette hypothèse est appelée $\boldsymbol{H}_0$ ;
- $\tilde{\Gamma}_1$ représente la meilleure des hypothèses à une fréquence d'échantillonnage parasitée $H_{m0}$, appelée $\boldsymbol{H}_1$, et
- $\tilde{\Gamma}_2$ représente la meilleure des hypothèses à deux fréquences d'échantillonnage parasitées $H_{m0,m1}$, appelée $\boldsymbol{H}_2$.

dans ce deuxième mode de réalisation, le procédé comporte aussi la détermination de la meilleure hypothèse parmi $\boldsymbol{H}_0, \boldsymbol{H}_1, \boldsymbol{H}_2$, celle choisie étant:

$\boldsymbol{H}_0$, si sa log-densité approchée $\tilde{\Gamma}_0$ satisfait le test d'adéquation à sa loi supposée gaussienne (voir cas mono-polarisation),

Sinon, $\boldsymbol{H}_1$, si sa log-densité approchée restreinte aux voies non parasitées $\tilde{\Gamma}_1$ satisfait le test d'adéquation à sa loi supposée gaussienne (voir cas monopolarisation),

Sinon, $\boldsymbol{H}_2$, si la log-densité approchée restreinte aux voies non parasitées $\tilde{\Gamma}_2$ satisfait le test d'adéquation à sa loi supposé gaussienne (voir cas monopolorisation),

Sinon, il y a plus que deux fréquences d'échantillonnage qui sont parasitées.

- les calculs sont limités aux domaines temps/fréquence présumés ne pas contenir que du bruit, par application d'un algorithme de pré-détection consistant à comparer la somme quadratique des modules des $R$ vecteurs de mesures de chaque domaine temps/fréquence, à un seuil prédéfini, réglé pour une probabilité de fausse alarme assez forte.
- le nombre de fréquences d'échantillonnages total $M$ est supérieur ou égal à 3, et le procédé détermine la situation de parasitage parmi toutes les hypothèses : aucune fréquence d'échantillonnage parasitée, une fréquence d'échantillonnage parasitées et ainsi de suite jusqu'à *M* - 2 fréquences d'échantillonnage parasitées.
- le procédé utilise la totalité des critères partiels, ou uniquement un ou deux des critères partiels, ou une pondération quelconque des critères partiels.
- les signaux traités sont réels ou complexes.
- le procédé fonctionne en mode dégradé si la résolution $\Delta F$ n'est pas identique pour toutes les grilles.

Il est maintenant décrit un exemple de mise en oeuvre plus détaillée.

La figure 2 illustre l'architecture générale d'un interféromètre 10 pour lequel l'invention s'applique.

L'interféromètre comprend *P* antennes $A_1, ... , A_P$ très large bande, a priori identiques, suivies chacune d'une chaîne de réception $CR_1, ... , CR_P$. Dans le cas général *P* est un nombre entier supérieur ou égal à 2. L'invention s'applique aussi lorsque *P* = 1.

Pour la suite, l'indice *p* de chaque antenne est un nombre entier compris entre 1 et *P,* servant également de référence à tous les éléments qui lui sont rattachés, moyens matériels, mesures et grandeurs diverses calculées.

Les centres de phase des antennes peuvent être répartis dans l'espace. La répartition spatiale des antennes $A_1, ... , A_P$ , est définie pour assurer une précision et un taux d'ambiguïtés angulaire spécifiés.

Derrière chaque antenne, un filtre analogique sélectionne une très large bande $[f_{min}, f_{max}]$.

Pour un signal bande étroite émis par une source à l'infini, le signal délivré par l'antenne d'indice p possède l'expression suivante :

$$s_p(t) = \rho_p a(t) \cos\left(2\pi f t + \Phi(t) + \varphi_p(\theta, \lambda)\right) + b_p(t)$$

où :

- *f* est la fréquence porteuse du signal incident comprise dans la bande de réception ; f=c/$\lambda$ où *c* est la vitesse de la lumière et $\lambda$ la longueur d'onde.
- *a*(*t*) et $\Phi$(*t*) sont les modulations du signal incident ;
- $\rho_p$ est le module du gain de l'antenne *p* ; pour un interféromètre on peut supposer que $\rho_p$ = 1 ;
- $\varphi_p(\theta, \lambda)$ est la somme du déphasage interférométrique du signal incident au centre de phase $M_p$ de l'antenne considéré relativement à un point de référence *O*, $\frac{2\pi}{\lambda}\overrightarrow{OM_p} \cdot \vec{u}(\theta)$ où $\overline{u}(\theta)$ est le vecteur unitaire dirigé dans la direction d'arrivée du signal incident $\theta$, objet principal de l'interféromètre, et de la phase du gain complexe de l'antenne dans la direction d'incidence du signal utile ; si le goniomètre est un interféromètre, ce deuxième terme peut être considéré comme nul. Dans la suite ce terme $\varphi_p(\theta,\lambda)$ sera appelé plus simplement déphasage interféro- métrique.
- $b_p(t)$ est le bruit thermique des chaînes de réception, supposé gaussien et indépendant entre chaînes de réception, et de densité spectrale uniforme et identique pour toutes les chaînes de réception.

Chaque chaîne de réception $CR_1, ... , CR_P$ est une partie strictement analogique qui est suivie d'au moins un module de réception numérique 20 comprenant un module de conversion analogique-numérique 22 associé à une fréquence d'échantillonnage 24 suivi d'un module de traitement numérique du signal 26.

Un module de conversion analogique-numérique 22 est propre à effectuer un échantillonnage du signal à la fréquence d'échantillonnage 24.

La fréquence d'échantillonnage 24 est telle que la bande de réception du signal analogique n'est pas contenue dans une seule zone de Nyquist. La fréquence d'échantillonnage 24 est inférieure voire très inférieure à la fréquence de Nyquist, mais elle reste bien supérieure à l'étalement spectral des signaux d'intérêt. Ainsi le spectre des signaux d'intérêt est préservé, mais il est translaté d'une éventuelle quantité qui dépend de la fréquence d'échantillonnage.

Un module de traitement numérique du signal 26 est propre à effectuer une analyse spectrale du signal converti en numérique, avec une transformée de Fourier discrète (TFD) pondérée.

L'interféromètre 10 comporte également un calculateur 28 récoltant les mesures obtenues en sortie de chaque module de traitement numérique du signal 26, et propre à obtenir la direction d'arrivée du signal incident sur l'ensemble des antennes $A_1, ... , A_P$. Ce calculateur 28 est également propre à mettre en oeuvre un procédé de détermination de situations de parasitage du signal dans la zone de Nyquist analysée par TFD.

L'interféromètre 10 dispose au total de *M* valeurs de fréquences d'échantillonnage 24 différentes de façon à lever les ambiguïtés en fréquence quand on passe de la fréquence mesurée dans la zone de Nyquist utilisée (a priori la première) par la TFD, à la fréquence dans la bande de réception, *M* étant un nombre entier supérieur ou égal à 3.

Une des caractéristiques de l'invention est de minimiser les effets de parasitage dus au repliement spectral sur les performances de la détection, et d'améliorer les performances des autres fonctions de la chaîne de traitement (estimation de la direction d'arrivée, caractérisation du signal) lorsque :

- 1 fréquence d'échantillonnage est parasitée, si $M$ vaut 3
- 1 *ou* 2 fréquences d'échantillonnage sont parasitées, si $M$ vaut 4
- 1,2, ... $M$ - 2 fréquences d'échantillonnage sont parasitées, si $M > 4$.

Ces M valeurs de fréquences d'échantillonnage 24 sont affectées aux modules de conversion analogique-numérique 22 échantillonnant le signal fourni par les chaînes de réception respectivement en amont, à la fréquence d'échantillonnage $fe_m$, $m$ étant un nombre entier compris entre 1 et $M$.

Si une fréquence d'échantillonnage donnée est affectée à un module de conversion analogique-numérique associé à une antenne donnée, elle ne l'est qu'une seule fois.

Le nombre de modules de réception numérique $R$ est au plus égal à $P \cdot M$. En pratique, pour des raisons matérielles, on cherche à minimiser $R$ tout en conservant les performances du réseau.

$R_m$ est le nombre de modules de réception numérique fonctionnant avec la fréquence d'échantillonnage $e_m$.

C'est aussi le nombre d'antennes associées à cette fréquence d'échantillonnage. On note que $R = \sum_{m=1}^{M} R_m$ , que toutes les valeurs de $R_m$ ne sont pas nécessairement identiques et que $R_m \leq P$.

$Q_p$ est le nombre de modules de réception numérique fonctionnant avec l'antenne d'indice $p$, $\alpha_p = \frac{Q_p}{R}$ est la proportion de ces modules de réception numérique. On note que $Q_p \leq M$, que $R = \sum_{p=1}^{P} Q_p$ et que toutes les valeurs de $Q_p$ ne sont pas nécessairement identiques.

$Q_{p,m_0}$ est le nombre de modules de réception numérique rattachés à l'antenne d'indice $p$, qui ne fonctionnent pas avec la fréquence $_{fem0}$, $\alpha_{p,m_0} = \frac{Q_{p,m_0}}{R-R_{m_0}}$ est la proportion de ces modules de réception numérique.

$Q_{p,m_0,m_1}$ est le nombre de modules de réception numérique rattachés à l'antenne d'indice p qui ne fonctionnent ni avec la fréquence d'échantillonnage $fe_{m_0}$ , ni avec la fréquence d'échantillonnage $fe_{m_1}$, $\alpha_{p,m_0,m_1} = \frac{Q_{p,m_0,m_1}}{R-R_{m_0}-R_{m_1}}$ est la proportion de ces modules de réception numérique.

Les modules de traitement numérique du signal 26 effectuent tous une analyse spectrale par TFD glissante du signal qui leur est présenté, afin d'en obtenir une représentation temps/fréquence réalisant une adaptation moyenne à la bande des signaux d'intérêt.

La TFD d'un module de réception numérique travaillant avec la fréquence d'échantillonnage $fe_m$ s'effectue sur une durée de signal $\Delta T_m$ avec un nombre d'échantillons $N_m = \Delta T_m \cdot fe_m$.

Afin d'obtenir des informations synchrones et de même résolution spectrale sur toutes les voies de réception, on impose un début et une fin d'acquisition communes aux TFD de chaque voie de réception. Ainsi pour toutes les valeurs de m :

$$\frac{N_m}{fe_m} = \Delta T_m = \Delta T = \frac{1}{\Delta F}$$

Les intervalles de temps successivement analysés par TFD peuvent être contigus ou à recouvrement. Si $r$ est le taux de recouvrement, les intervalles de temps sont $[i(1 - r)\Delta T, i(2 - r)\Delta T[$ où $i$ est l'indice courant du temps de l'intervalle.

Par exemple avec un recouvrement de 50%, ces intervalles de temps sont $\left[i\frac{\Delta T}{2}, i\frac{\Delta T}{2} + \Delta T\right[$ .

Si le signal d'entrée d'une TFD est réel sur $N_m$ points, la sortie est en conséquence un spectre utile complexe, discret sur $N_m$ points indicés par $j$ allant de 0 à $N_m$ - 1, au pas de $\Delta F$. Si le signal d'entrée est un signal complexe obtenu après double démodulation en quadrature, alors on obtient directement le spectre du signal analytique par une transformé de Fourier à $N_m$ points.

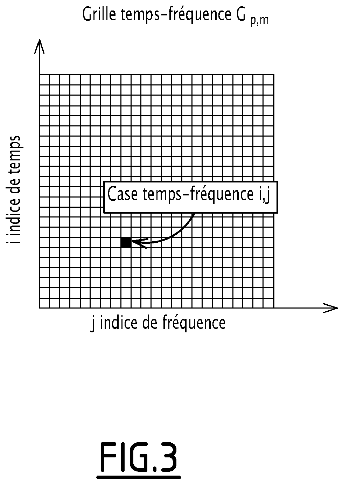

Chaque TFD délivre ainsi dans le temps une grille temps/fréquence. Chaque case d'une grille contient un complexe $y_{p,m,i,j}$ indicé par $j$ en fréquence avec un pas $\Delta F$, par $i$ en temps avec un pas $(1 - r)\Delta T$, par $p$, indice du capteur, et par *m,* indice de fréquence d'échantillonnage. La figure 3 en donne une illustration.

Finalement, l'ensemble des *R* TFD des *R* modules de réception numérique délivrent *R* grilles temps/fréquence de même résolution temporelle et fréquentielle. Chaque grille temps/fréquence est indicée par *p*, et par *m* et notée $G_{p,m}$.

La bande de réception est supposée découpée en *K* intervalles fréquentiels de largeur égale à la résolution commune des TFD, $\Delta F$. Chaque intervalle est identifié par un indice *k*. Le traitement élabore, hors ligne, une table de correspondance qui fournit l'indice *y* de la fréquence dans la bande de Nyquist en fonction de l'indice *k* de la fréquence dans la bande de réception et de l'indice *m* de la fréquence d'échantillonnage, *j = j(k, m)*.

La durée de la tranche de temps $\Delta T$ est en général plus courte que celle des signaux d'intérêt, et donc un signal utile apparaît sur plusieurs analyses spectrales successives dans le temps.

Il apparaît aussi dans plusieurs canaux fréquentiels adjacents car son spectre n'est pas nécessairement centré dans un des canaux de la TFD, sa largeur spectrale peut être supérieure à $\Delta F$.

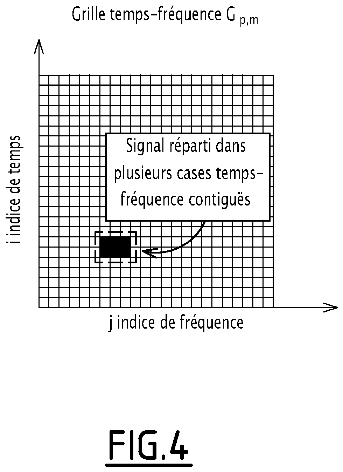

Le résultat est qu'un signal utile est généralement perçu, par les analyses spectrales successives dans le temps, sous la forme d'un ensemble connexe de plusieurs cases temps/fréquences. La figure 4 en donne une illustration.

La présente invention propose de modéliser et de traiter le signal reçu sur des domaines temps/fréquence correspondant chacun à un intervalle limité en temps (typiquement la durée de quelques TFD) et en fréquence (typiquement quelques canaux).

La bande [$f_{min}$, $f_{max}$[ est découpée en intervalles fréquentiels, recouvrants ou non, de largeur $L_2\Delta F$, $L_2$ étant un entier naturel. De même, l'axe temporel est découpé en intervalles, recouvrants ou non, de durée $L_1(1 - r)\Delta T$, $L_1$ étant un entier naturel. Pour chaque domaine temps/fréquence ainsi obtenu, la table de correspondance permet de prélever un ensemble de $L = L_1 \times L_2$ cases temps/fréquences connexes, appelé fenêtre, pour chacune des *R* voies de réception.

Le traitement analyse ensuite tous les domaines temps/fréquence indépendamment les uns des autres.

Un ordre de lecture des cases est choisi arbitrairement et identiquement pour toutes les fenêtres, par exemple, d'abord dans l'axe des fréquences, puis dans l'axe du temps. L'ensemble des *L* mesures de chaque fenêtre forme un vecteur, appelé vecteur de mesures, qui peut être indicé par *p,* le numéro de capteur, *m,* le numéro de la fréquence d'échantillonnage, *i'* et *j'* où *i'* et *j'* sont choisis parmi les indices *i* et *j* des cases de la fenêtre, de manière arbitraire mais identique pour toutes les fenêtres. Par exemple, *i'* et *j'* peuvent être choisis égaux à l'indice *i* et à l'indice *j* de la case supérieure gauche.

Avec les conventions prises en exemple, et avec, par exemple, $L_1$ = 2 et $L_2$ = 3 le vecteur $Y_{pmi'j'}$ est égal à :

$$Y_{p,m,i',j'} = \left( y_{p,m,i',j'} \; y_{p,m,i',j'+1} \; y_{p,m,i',j'+2} \; y_{p,m,i'+1,j'} \; y_{p,m,i'+1,j'+1} \; y_{p,m,i'+1,j'+2} \right)^T$$

Où *T* désigne l'opérateur de transposition.

Pour simplifier les écritures, un vecteur $Y_{pmi'j'}$ sera par la suite simplement noté $Y_{pm}$, étant entendu que les fenêtres intervenant dans le traitement correspondent toutes à un même domaine temps/fréquence, et que tous les domaines temps/fréquence sont traités de manière identique et indépendamment les uns des autres.

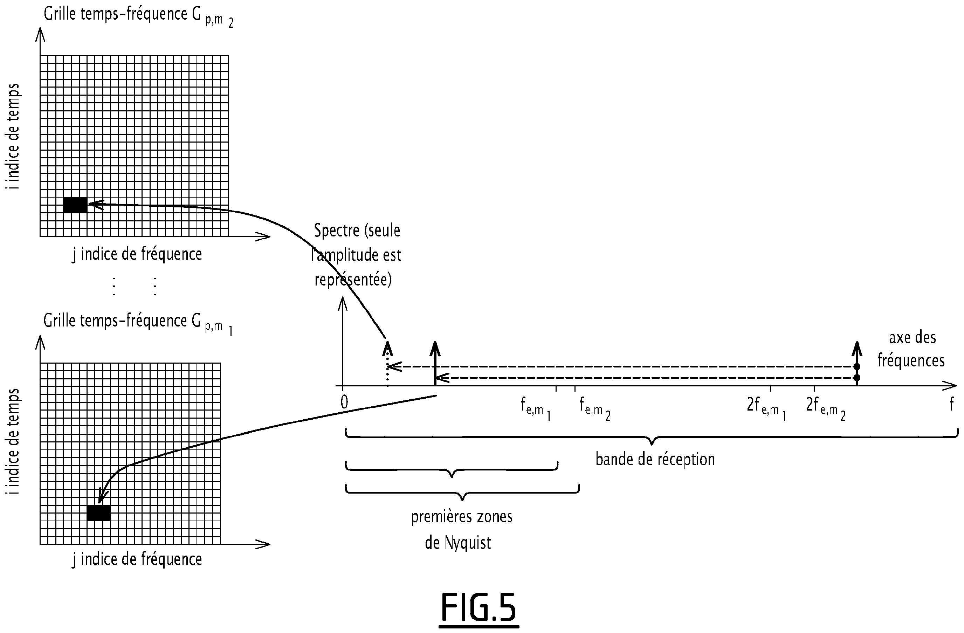

Pour deux fréquences d'échantillonnage différentes, les valeurs de *i'* sont différentes, et les positions en fréquence des fenêtres sont donc différentes. La figure 5 en donne l'illustration.

Dans une variante du traitement, une étape de prédétection permet de diminuer la quantité de calculs, en éliminant les domaines temps/fréquence ne contenant pas de signal utile. Ce traitement de prédétection consiste, par exemple, à calculer pour chaque domaine temps/fréquence, la somme quadratique des modules des *R* vecteurs correspondant à ce domaine temps/fréquence, $\Sigma_{p,m}\|Y_{pm}\|^2$, puis à comparer la valeur obtenue à un seuil prédéfini. Le seuil en question est réglé pour un taux de fausse alarme assez élevé, de façon à garantir qu'aucun domaine temps/fréquence contenant du signal utile soit éliminé à tort, la probabilité de fausse alarme finale étant assurée par l'étape de détection proprement dite.

Dans le cadre du dispositif de réception radioélectrique précédemment décrit, le procédé comporte une fonction de détermination, pour un vecteur de mesures donné, de la situation de parasitage (absence de parasites, ou présence de parasites, et quelles sont les fréquences d'échantillonnages parasités) :

Cette fonction de détermination considère les cas de parasitage suivants :

Aucune fréquence d'échantillonnage n'est parasitée, hypothèse désignée par $H_0$ ;
Présence d'un parasite (ou plus) sur une des fréquences d'échantillonnage $m_0(m_0 \in [1, M])$, soit *M* hypothèses désignées par $H_{m_0}$ ($m_0 \in [1, M]$);
Présence d'un parasite (ou plus) sur une deuxième fréquence d'échantillonnage $m_1$, différente de $m_0$, soit *M(M - 1)/2* hypothèses désignées par :

$$H_{m_0 m_1} \ (m_0 \in [1, M], m_1 \in [1, M], m_0 \neq m_1).$$

Il est proposé de modéliser les vecteurs de mesures de la façon suivante dans $H_0$ :

$$Y_{pm} = Ae^{i\varphi_p} + V_{pm}$$

Où :

- $\varphi_p$ est le déphasage interférométrique du signal reçu par une antenne, par rapport à une référence,
- $A$ un vecteur complexe représentant le signal utile,
- $V_{pm}$ est le vecteur du bruit thermique. Les $V_{pm}$ sont des échantillons d'une variable aléatoire vectorielle gaussienne complexe. Ces échantillons sont indépendants d'un $p$ à l'autre et ont pour covariance supposée commune et environ égale à $2\sigma^2 I_L$, où $I_L$ est la matrice identité de taille $L \times L$. Pour un même $p$ et pour deux m différents on peut aussi supposer qu'il y a indépendance des $V_{pm}$ car seul le bruit prélevé dans la largeur du filtre de la TFD au voisinage de la vraie fréquence du signal est commun.

Ce modèle est valable pour une onde plane (source supposée à l'infini) et pour un signal utile à bande étroite.

Les vecteurs de mesures sont donc considérées, sous l'hypothèse $H_0$, comme des variables aléatoires complexes indépendantes vectorielles gaussiennes de moyenne $Ae^{i\varphi_p}$ et de covariance $2\sigma^2 I_L$. Ce modèle est indépendant de la forme d'onde des signaux.

Sur certains échantillonnages, il se peut qu'on mesure, en plus du signal utile, un ou plusieurs signaux parasites présents pendant la même tranche de temps d'analyse spectrale, mais dont la somme ou la différence des fréquences ont des valeurs dans la bande de réception diffèrent de des valeurs multiples de la fréquence d'échantillonnage.

Lorsqu'il y a présence d'un parasite à une fréquence d'échantillonnage indicée par $m_0$ (i.e. quand on est dans une des hypothèses $H_{m_0}$), le vecteur de mesures $Y_{pm_0}$ s'écrit alors, en généralisant le modèle précédent :

$$Y_{pm_0} = Ae^{i\varphi_p} + B_1 e^{i\psi_{1p}} + V_{pm}$$

où $B_1$ est un vecteur complexe de dimension $L$ représentant le parasite, et $\psi_{1p}$ le déphasage interférométrique de ce parasite pour l'antenne $p$.

Si deux parasites sont présents à deux fréquences d'échantillonnage $m_0$ et $m_1$ différentes (i.e. quand on est dans une des hypothèses $H_{m_0 m_1}$), on généralise encore :

$$\begin{cases} Y_{pm_0} = Ae^{i\varphi_p} + B_1 e^{i\psi_{1p}} + V_{pm_0} \\ Y_{pm_1} = Ae^{i\varphi_p} + B_1 e^{i\psi_{2p}} + V_{pm_1} \end{cases}$$

Selon la théorie de la décision, il convient de calculer la valeur prise par les densités de probabilité représentant chacune des hypothèses pour les mesures observées, puis choisir l'hypothèse qui maximise cette valeur. Cette stratégie minimise la probabilité d'erreur dans l'hypothèse où toutes les situations sont équiprobables.

Les difficultés sont le nombre de paramètres inconnus ( $A$, $B_1$, $B_2$, les $\varphi_p$, $\psi_{1p}$, $\psi_{2p}$), et la complexité des calculs qui en découle si on veut appliquer la méthode classique, qui consiste à remplacer les paramètres inconnus par leur estimée au sens du maximum de vraisemblance (Maximum de Vraisemblance Généralisé).

Pour diminuer le nombre de paramètres inconnus du modèle physique ci-dessus, il est proposé d'utiliser, pour décrire les vecteurs de mesures parasités, un modèle statistique simplifié. Dans ce modèle, les vecteurs de mesures parasités sont représentées par des vecteurs complexes de dimension $L$. Les parties réelle et imaginaire des composantes de ces vecteurs sont des échantillons indépendants d'une variable aléatoire réelle centrée et uniformément distribuée sur un intervalle de largeur $\sqrt{C}$ de telle sorte que la densité de probabilité des vecteurs de mesures sera $(1/C)^L$. Ce modèle s'applique pour un nombre quelconque de parasites par fréquence d'échantillonnage. La détermination du coefficient $C$ est expliquée en annexe.

A l'issue de cette simplification, dans l'hypothèse où un seul échantillonnage est parasité (on appellera $m_0$ cet échantillonnage et $H_{m_0}$ cette hypothèse), on peut écrire la densité de probabilité comme le produit des densités de probabilité des vecteurs de mesures sur l'ensemble des capteurs et des échantillonnages :

$$p_{m_0}\left(les\ Y_{pm}, A, les\varphi_p, C\right) = \frac{1}{(2\pi\sigma^2)^{RL}}\left(\frac{2\pi\sigma^2}{C}\right)^{R_{moL}} exp\left\{-\frac{1}{2\sigma^2}\sum_{p,m,m\neq m_0}\left\|Y_{pm} - Ae^{i\varphi_p}\right\|^2\right\}$$

La technique habituelle consiste à remplacer les paramètres inconnus (*A* et les $\varphi_p$) par leur estimée au sens du maximum de vraisemblance dans chaque hypothèse. Les calculs étant trop compliqués en ce qui concerne les $\varphi_p$, le demandeur propose de remplacer la densité de probabilité par un majorant.

Le procédé propose ainsi de sélectionner l'hypothèse dont le majorant de la densité de probabilité est maximum. Après application de la fonction logarithme, puis suppression du terme *RL ln*($2\pi\sigma^2$) qui est commun à toutes les hypothèses, on obtient le critère à maximiser :

$$\hat{\Gamma}_{m_0} = R_{m_0}L\ ln\left(\frac{2\pi\sigma^2}{C}\right) + \tilde{\Gamma}_{m_0}$$

où

$$\tilde{\Gamma}_{m_0} = -\frac{1}{2\sigma^2}\sum_{p,m,m\neq m_0}\left\|\tilde{Y}_{pm}\right\|^2 (\text{terme } \gamma_{m_0}^{\text{var}})$$
$$+ \frac{(R - R_{m_0})}{2\sigma^2}\left[\left(\sum_p \alpha_{pm_0}\left\|Z_{pm_0}\right\|\right)^2 - \sum_p \alpha_{pm_0}\left\|Z_{pm_0}\right\|^2\right](\text{terme } \gamma_{m_0}^{\text{mod}})$$
$$+ \frac{(R - R_{m_0})}{2\sigma^2}\left[2\sum_{p<q}\alpha_{pm_0}\alpha_{qm_0}\left(\left|Z_{pm_0}^*Z_{qm_0}\right| - \left\|Z_{pm_0}\right\|\left\|Z_{qm_0}\right\|\right)\right](\text{terme } \gamma_{m_0}^{col})$$

où $Z_{pm0}$ représente la moyenne des $Y_{pm}$, sur tous les échantillonnages de l'antenne p, sauf sur l'échantillonnage supposé parasité $m_0 : Z_{pm_0} = \frac{1}{Q_{pm_0}}\sum_{m\neq m_0}Y_{pm}$,
et où $\tilde{Y}_{pm}$ est l'écart du vecteur $Y_{pm}$ par rapport à sa moyenne $Z_{pm0} : Y_{pm} = Z_{pm0} + \tilde{Y}_{pm}$.

Le terme $\hat{\Gamma}_{m0}$, qui provient des voies supposées non parasitées, et qui est croissant en fonction de $R_{m0}$, favorise l'élimination d'un maximum de voies de réception. C'est pourquoi le terme $R_{m_0}L\ ln\left(\frac{2\pi\sigma^2}{C}\right)$, qui provient des voies parasitées, et qui est négatif ou nul dès que $2\pi\sigma^2 < C$, est nécessaire pour choisir la bonne hypothèse. Ce terme joue le rôle d'une pénalité pour les hypothèses où l'on élimine des voies de réception.

Dans la suite, le terme $\tilde{\Gamma}_{m0}$ est appelé log-densité approchée restreinte (i.e. restreinte aux voies de réception supposées non parasitées). Le terme $\hat{\Gamma}_{m0}$ s'interprète comme la somme de trois termes ou critères partiels :

Le terme $\gamma_{m_0}^{var}$ ce terme est inférieur ou égal à zéro, avec égalité si pour tout m $\neq m_0$, $Y_{pm} = Z_{pm_0}$. Ce terme constitue un critère de non-variabilité des $Y_{pm}$ par rapport à leur valeur filtrée sur les différentes fréquences d'échantillonnage de l'antenne *p* (hormis la ou les fréquences d'échantillonnage supposées parasitées dans l'hypothèse considérée)

Le terme $\gamma_{m_0}^{mod}$ ; ce terme est inférieur ou égal à zéro, avec égalité si $\|Z_{pm0}\|$ est indépendant de *p*. Ce terme constitue un critère d'égalité des modules des $Y_{pm}$ filtrés sur les différentes fréquences d'échantillonnage de l'antenne *p* (hormis la ou les fréquences d'échantillonnage supposées parasitées dans l'hypothèse considérée)

Le terme $\gamma_{m_0}^{col}$ ; ce terme est inférieur ou égal à zéro, avec égalité si pour tout $p < q$, $Z_{pm_0}$ est colinéaire à $Z_{qm_0}$. Ce terme constitue un critère de colinéarité des $Y_{pm}$ et des $Y_{qm}$ filtrés sur les différentes fréquences d'échantillonnage de l'antenne *p* et de l'antenne q (hormis la ou les fréquences d'échantillonnage supposées parasitées dans l'hypothèse considérée)

Dans le cas des hypothèses de type $H_{m_0,m_1}$ (un parasite ou plus présent sur la fréquence d'échantillonnage $m_0$ et un parasite (ou plus) présent sur la fréquence d'échantillonnage $m_1$), le critère devient :

$$\hat{\Gamma}_{m_0 m_1} = R_{m_0,m_1} L \ln\left(\frac{2\pi\sigma^2}{C}\right) + \tilde{\Gamma}_{m_0 m_1}$$

où :

- $R_{m_0 m_1}$ est le nombre de modules de réception fonctionnant avec la fréquence $fe_{m_0}$ ou avec la fréquence $fe_{m_1}$ : $R_{m_0,m_1} = R_{m_0} + R_{m_1}$

- $\hat{\Gamma}_{m_0 m_1} = \frac{1}{2\sigma^2}\gamma_{m_0 m_1}^{var} + \frac{R-R_{m_0 m_1}}{2\sigma^2}\gamma_{m_0 m_1}^{mod} + \frac{R-R_{m_0 m_1}}{2\sigma^2}\gamma_{m_0 m_1}^{col}$ ,

- $\gamma_{m_0,m_1}^{var} = -\sum_{p,m,m\neq m_0,m_1}\left\|\tilde{Y}_{pm}\right\|^2$ où pour tout $p, m$ tel que $m \neq m_0, m_1$, $\tilde{Y}_{pm}$ est la différence du vecteur $Y_{pm}$ par rapport à la moyenne $Z_{pm_0 m_1}$ (critère de non variabilité par rapport à la moyenne),

- $\gamma_{m_0,m_1}^{mod} = \left(\sum_p \alpha_{pm_0 m_1}\left\|Z_{pm_0 m_1}\right\|\right)^2 - \sum_p \alpha_{pm_0 m_1}\left\|Z_{pm_0 m_1}\right\|^2$ (critère d'égalité des modules),

- $\gamma_{m_0,m_1}^{col} = 2\sum_{p<q}\alpha_{pm_0 m_1}\alpha_{qm_0 m_1}\left(\left|Z^*_{pm_0 m_1}Z_{qm_0 m_1}\right| - \left\|Z_{pm_0 m_1}\right\|\left\|Z_{qm_0 m_1}\right\|\right)$ (critère de colinéarité).

Dans ce mode de réalisation, on examine successivement $\tilde{\Gamma}_k$, $k = 0,1,2$, et on sélectionne le premier $\tilde{\Gamma}_k$, $k = 0,1,2$ dont l'adéquation à sa loi supposée gaussienne (de moyenne et de variance $\mu_k$, $\sigma_k^2$, $k = 0,1,2$) est supérieure à un seuil $S$ choisi pour respecter un taux d'erreur fixé. Les $\mu_k$ et $\sigma_k$ peuvent être calculés hors ligne par simulation.

L'adéquation est définie comme :

$$P(\tilde{\Gamma}_k, \mu_k, \sigma_k) = \frac{1}{\sqrt{2\pi}\sigma_k}\exp\left(-\frac{(\tilde{\Gamma}_k - \mu_k)^2}{2\sigma_k^2}\right)$$

$H_0$ est décidée si $P(\tilde{\Gamma}_0, \mu_0, \sigma_0)$ est supérieure à $S$.

Si $P(\tilde{\Gamma}_0, \mu_0, \sigma_0)$ n'est pas supérieure au seuil $S$, $H_1$ est décidée si $P(\tilde{\Gamma}_1, \mu_1, \sigma_1)$ est supérieure au seuil $S$.

Si $P(\tilde{\Gamma}_1, \mu_1, \sigma_1)$ n'est pas supérieure au seuil $S$, $H_2$ est décidée si $P(\tilde{\Gamma}_2, \mu_2, \sigma_2)$ est supérieure au seuil $S$.

Si $P(\tilde{\Gamma}_2, \mu_2, \sigma_2)$ n'est pas supérieure au seuil $S$, cela signifie qu'il y a plus de deux fréquences d'échantillonnage occasionnant un parasitage du signal considéré.

Pour des raisons pratiques il est possible de travailler avec l'opposé du logarithme de l'adéquation :

$$-\ln P(\tilde{\Gamma}_k, \mu_k, \sigma_k) = \frac{(\tilde{\Gamma}_k - \mu_k)^2}{2\sigma_k^2} + \ln\sqrt{2\pi}\sigma_k$$

Dans ces conditions, les tests de supériorité de $P(\tilde{\Gamma}_k, \mu_k, \sigma_k)$ par rapport à $S$ se transforment en tests d'infériorité de $-\ln P(\tilde{\Gamma}_k, \mu_k, \sigma_k)$ par rapport à $-\ln S$.

Pour les hypothèses $H_1$ et $H_2$, les fréquences d'échantillonnage occasionnant le parasitage sont déterminées respectivement par :

$$\hat{m}_0 = \underset{m_0=1,\dots,M}{\mathrm{Argmax}}\left(\tilde{\Gamma}_{m_0} + R_{m_0}L\cdot\ln\left(\frac{2\pi\sigma^2}{C}\right)\right)$$

et

$$(\hat{m}_0, \hat{m}_1) = \underset{\substack{m_0=1,\dots,M \\ m_1=1,\dots,M \\ m_0 \neq m_1}}{\text{Argmax}} \left( \tilde{\Gamma}_{m_0,m_1} + R_{m_0,m_1} L \cdot \ln\left(\frac{2\pi\sigma^2}{C}\right) \right)$$

Dans ce mode de réalisation, le procédé s'affranchit de la dépendance en C pour sélectionner la meilleure hypothèse.

Dans le cas de l'hypothèse $H_0$ (aucun parasite présent), le critère devient :

$$\hat{\Gamma}_0 = \tilde{\Gamma}_0 = \frac{1}{2\sigma^2}\gamma^{\text{var}} + \frac{R}{2\sigma^2}\gamma^{\text{mod}} + \frac{R}{2\sigma^2}\gamma^{col}$$

Où :

- $\gamma^{var} = -\sum_{p,m}\|\tilde{Y}_{pm}\|^2$ où $\tilde{Y}_{pm}$ est la différence de chaque vecteur $Y_{pm}$ par rapport à sa moyenne $Z_p$ (critère de non variabilité par rapport à la moyenne),
- $\gamma^{mod} = (\sum_p \alpha_p\|Z_p\|)^2 - \sum_p \alpha_p\|Z_p\|^2$ (critère d'égalité des modules), et

- $\gamma^{col} = 2\sum_{p<q}(|Z^*_p Z_q| - \|Z_p\|\|Z_q\|)$ (critère de colinéarité).

Dans un premier mode de réalisation, on recherche le maximum de $\hat{\Gamma}_0$, $\hat{\Gamma}_{m0,m_0\in[1,M]}$, $\hat{\Gamma}_{m_0,m_1,m_0\in[1,M],m_1\in[1,M]m0\neq m1}$.

Si $\hat{\Gamma}_0 = \max(\Gamma_0, \Gamma_{m0,m_0\in[1,M]}, \hat{\Gamma}_{m_0,m_1,m_0\in[1,M]m_1\in[1,M],m_0\neq m_1})$, alors il y a absence de parasite (hypothèse $H_0$ ).

Si il existe $\hat{m}_0$ tel que $\hat{\Gamma}_{m_0} = \max(\Gamma_{m_0}, \Gamma_{m0,m_0\in[1,M]}, \Gamma_{m_0,m_1,m_0\in[1,M]m_1\in[1,M],m_0\neq m_1})$, alors il y a une seule fréquence d'échantillonnage parasitée, et cette fréquence d'échantillonnage est $m_0$ (hypothèse $H_{m0}$).

Si il existe un couple $\hat{m}_0, \hat{m}_1$ tel que

$$\hat{\Gamma}_{\hat{m}_0,\hat{m}_1} = \max\left(\hat{\Gamma}_0, \hat{\Gamma}_{m_0,m_0\in[1,M]}, \hat{\Gamma}_{m_0,m_1,m_0\in[1,M]m_1\in[1,M]m_0\neq m_1}\right),$$

alors il y a deux fréquences d'échantillonnage parasitées, et ces fréquences sont $\hat{m}_0$ et $\hat{m}_1$ (hypothèse $H_{m0m_1}$).

Dans un deuxième mode de réalisation, le procédé comporte le calcul des trois grandeurs suivantes. Ces calculs ne nécessitent pas la connaissance de C.

$$\tilde{\Gamma}_0 = \tilde{\Gamma}_0$$

$$\tilde{\Gamma}_1 = \max_{m_0=1,\dots,M}\left(\tilde{\Gamma}_{m_0}\right)$$

$$\tilde{\Gamma}_2 = \max_{\substack{m_0=1,\dots,M \\ m_1=1,\dots,M \\ m_0\neq m_1}}\left(\tilde{\Gamma}_{m_0 m_1}\right)$$

Où :

- $\tilde{\Gamma}_0$ représente l'hypothèse « absence de parasite ». Cette hypothèse est appelée $H_0$.
- $\tilde{\Gamma}_1$ représente la meilleure des hypothèses à une fréquence d'échantillonnage parasitée $H_{m0}$. Cette hypothèse est appelée $H_1$.
- $\tilde{\Gamma}_2$ représente la meilleure des hypothèses à deux fréquences d'échantillonnage parasitées $H_{m_0,m_1}$. Cette hypothèse est appelée $H_2$.

Le traitement proposé se généralise à différents choix matériels et différentes situations de réception, au moyen

des équations suivantes :

$$\tilde{\Gamma}_0 = \frac{1}{2\sigma^2}\left(c_{var}\gamma^{var} + c_{mod}R\gamma^{mod} + c_{col}R\gamma^{col}\right)$$

$$\tilde{\Gamma}_{m_0} = \frac{1}{2\sigma^2}\left(c_{var}\gamma_{m_0}^{var} + c_{mod}(R - R_{m_0})\gamma_{m_0}^{mod} + c_{col}(R - R_{m_0})\gamma_{m_0}^{col}\right)$$

$$\tilde{\Gamma}_{m_0,m_1} = \frac{1}{2\sigma^2}\left(c_{var}\gamma_{m_0,m_1}^{var} + c_{mod}\left(R - R_{m_0,m_1}\right)\gamma_{m_0,m_1}^{mod} + c_{col}\left(R - R_{m_0,m_1}\right)\gamma_{m_0,m_1}^{col}\right)$$

où $c_{var}$, $c_{mod}$ et $c_{col}$ sont des coefficients binaires (de valeur 0 ou 1) utilisés pour limiter et adapter les calculs à certains choix matériels et à certaines situations de réception.

Ainsi, on pourra choisir par exemple :

- $(c_{var}, c_{mod}, c_{col})$ = (0,1,1) s'il n'y a qu'une fréquence d'échantillonnage par chaîne de réception ;
- $(c_{var}, c_{mod}, c_{col})$ = (1,0,1) si l'on considère que le module des mesures peut varier d'une antenne à l'autre sans que cela soit la conséquence d'un parasitage. Ce cas peut se produire, par exemple, en raison de couplages entre antennes, ou dans le cas de la réception d'un signal suivant différents trajets (direct et réfléchi sur les structures du porteur ou autres structures externes) ou si le réseau utilisé n'est pas normalisé en gain (cas d'un réseau à goniométrie d'amplitude) ;
- $(c_{var}, c_{mod}, c_{col})$ = (1,1,0) si $L$ = 1 ;
- $(c_{var}, c_{mod}, c_{col})$ = (0,0,1) s'il n'y a qu'une fréquence d'échantillonnage par chaîne de réception et si le module des mesures est amené à varier d'une antenne à l'autre (pour les raisons précitées) ;
- $(c_{var}, c_{mod}, c_{col})$ = (0,1,0) s'il n'y a qu'une fréquence d'échantillonnage par chaîne de réception et si $L$ = 1
- $(c_{var}, c_{mod}, c_{col})$ = (1,0,0) si le module des mesures est amené à varier d'une antenne à l'autre (pour les raisons précitées) et si $L$ = 1.

Le traitement élimine ensuite de l'ensemble des $R$ vecteurs $Y_{p,m}$, ceux dont l'indice de fréquence d'échantillonnage $m$ correspond à une fréquence d'échantillonnage parasitée. Sur l'ensemble des vecteurs $Y_{p,m}$ ainsi obtenu, on procède à une détection conventionnelle du signal en présence de bruit thermique.

Ce traitement est répété pour tous les domaines temps/fréquence, ou, dans la variante avec prédétection, sur tous les domaines temps/fréquence sélectionnés par la prédétection.

## Revendications

1. Procédé de détermination des situations de parasitage dû au repliement spectral dans un récepteur numérique large bande, le procédé étant mis en oeuvre au moyen d'un interféromètre à $P$ antennes, $P$ étant un nombre entier supérieur ou égal à 1, chaque antenne étant suivie d'une chaîne de réception analogique et d'au moins un module de réception numérique, le nombre de modules de réception numérique étant $R$, le procédé comprenant au moins une étape de :

   - échantillonnage des signaux délivrés par l'ensemble des chaînes de réception, à l'aide de $M$ fréquences d'échantillonnage $fe_m$ différentes, inférieures à la fréquence de Nyquist-Shannon, $m$ allant de $1$ à $M$, et $M$ étant un nombre entier supérieur ou égal à 4, le nombre de modules de réception numériques fonctionnant avec une fréquence $f_m$ étant égal à $R_m$, et le nombre de modules de réception numérique pour une antenne $p$ étant $Q_p$, avec $R = \sum_{m=1}^{N} R_m = \sum_{p=1}^{P} Q_p$ , lesdites fréquences d'échantillonnage $fe_m$ procurant des nombres entiers d'échantillons $N_m$ sur plusieurs intervalles de temps de durée $\Delta T$ donnée,
   - analyse spectrale par des transformées de Fourier discrètes successives, et synchrones, permettant, sur chacun des $R$ modules de réception numérique, une représentation temps/fréquence appelée grille, de résolution temporelle $\Delta T$, et de résolution fréquentielle $\Delta F$, chaque élément de la grille étant appelé case temps/fréquence et contenant une grandeur complexe appelée mesure,

- sélection d'un ensemble de domaines temps/fréquence (dans la bande de réception), chaque domaine temps/fréquence étant perçu dans les R modules de réception numérique comme R fenêtres superposables, chacune des fenêtres étant composée de L cases temps/fréquence connexes,
- pour chaque domaine temps/fréquence, concaténation des mesures prélevées dans chacune des R fenêtres sous forme de R vecteurs de dimension $L \times 1$ notés $Y_{pm}$, où $p$ est l'indice du capteur et $m$ l'indice de l'échantillonnage,

le procédé étant **caractérisé en ce que** le procédé comporte, en outre, une étape de :

- détermination de la présence de parasites éventuels sur chaque domaine temps/fréquence, consistant à déterminer parmi les hypothèses suivantes :

- $H_0$ : absence de parasite,
- $H_{m0}$ : présence d'au moins un parasite sur l'échantillonnage $m_0$, avec $m_0 \in [1, M]$, et
- $H_{m_0,m_1}$ : présence d'au moins un parasite sur l'échantillonnage $m_0$ et d'au moins un parasite sur l'échantillonnage $m_1$ , avec $m_1 \in [1, M], m_0 \neq m_1$ et $m_0 \in [1, M]$

à partir des vecteurs de mesures obtenus, l'hypothèse maximisant une approximation du logarithme de la densité de probabilité des R vecteurs de mesures $Y_{pm}$, ledit logarithme de la densité de probabilité étant dénommé log-densité de probabilité, cette approximation étant calculable uniquement à l'aide de modules carrés, de produits scalaires et de moyennes des mesures et résultant :

- d'une modélisation des vecteurs de mesures $Y_{pm}$ supposés non parasités par des échantillons indépendants d'une variable aléatoire vectorielle complexe de dimension $L$, de densité de probabilité gaussienne de moyenne $Ae^{i\varphi_p}$ et de covariance $2\sigma^2 I_L$, où $A$ est le vecteur complexe de dimension $L$ représentant le signal utile, $\varphi_p$ le déphasage interférométrique, $2\sigma^2$ la puissance du bruit dans une case temps/fréquence, et $I_L$ la matrice identité de dimension $L \times L$,
- d'une modélisation des vecteurs de mesures $Y_{pm}$ supposés parasités par des vecteurs complexes de dimension $L$, où les composantes de ces vecteurs sont des échantillons indépendants d'une variable aléatoire complexe centrée à composantes réelle et imaginaire indépendantes et uniformément distribuées sur un intervalle de largeur $\sqrt{C}$ de telle sorte que la densité de probabilité des vecteurs de mesures sera $(1/C)^L$, puis
- d'une majoration de la densité de probabilité des R vecteurs de mesures $Y_{pm}$,

l'approximation ainsi obtenue étant égale à la somme d'un terme jouant le rôle de pénalité pour les $Y_{pm}$ supposés parasitées, et d'un terme provenant de la densité de probabilité des $Y_{pm}$ supposés non parasités,

l'hypothèse choisie étant :

- $H_0$ , si sa log-densité approchée est celle dont l'adéquation à sa loi supposée gaussienne est maximale,
- sinon, $H_{m_0}$, si sa log-densité approchée restreinte aux voies non parasitées est celle dont l'adéquation à sa loi supposée gaussienne est maximale,

- sinon, $H_{m_0,m_1}$, si sa log-densité approchée restreinte aux voies non parasitées est celle dont l'adéquation à sa loi supposée gaussienne est maximale.

2. Procédé de détermination de la situation de parasitage selon la revendication 1, dans lequel il est calculé au moins l'un des critères suivants :

- un critère de non-variabilité des $Y_{pm}$ par rapport à leur valeur filtrée sur les différentes fréquences d'échantillonnage propres à l'antenne $p$
- un critère d'égalité des modules des $Y_{pm}$ filtrés sur les différentes fréquences d'échantillonnage propres à l'antenne $p$, et
- un critère de colinéarité des $Y_{pm}$ filtrés sur les différentes fréquences d'échantillonnage de l'antenne $p$.

3. Procédé de détermination de la situation de parasitage selon la revendication 2, dans lequel le ou les critères calculés sont utilisés pour obtenir une approximation de la log-densité de probabilité des mesures.

4. Procédé de détermination de la situation de parasitage selon l'une quelconque des revendications 1 à 3, dans lequel la log-densité de probabilité approchée se calcule selon les approximations suivantes :
pour l'hypothèse $H_0$:

$$\hat{\varGamma}_0 = \frac{1}{2\sigma^2}\gamma_0^{var} + \frac{R}{2\sigma^2}\left(\gamma_0^{mod} + \gamma_0^{col}\right)$$

où:

•

$$\gamma_0^{var} = -\sum_{p,m}\left\|\tilde{Y}_{pm}\right\|^2, \gamma_0^{mod} = \left(\sum_p \alpha_p \left\|Z_p\right\|\right)^2 - \sum_p \alpha_p \left\|Z_p\right\|^2, \gamma_0^{col} =$$

$$2\sum_{p<q}\alpha_p\,\alpha_q\left(\left|Z_p^*Z_q\right| - \left\|Z_p\right\|\left\|Z_q\right\|\right),$$

• $\alpha_p = \frac{Q_p}{R}$,

• $Z_p$ est la moyenne des vecteurs $Y_{pm}$ sur les modules de réception associées à une même antenne $p : Z_p = \frac{1}{Q_p}\sum_m Y_{pm}$, et

• $\tilde{Y}_{pm}$ est l'écart d'un vecteur $Y_{pm}$ par rapport à la moyenne $Z_p$ ; pour les hypothèses $H_{m_0}$:

$$\hat{\varGamma}_{m0} = R_{m_0}L\ln\left(\frac{2\pi\sigma^2}{C}\right) + \tilde{\varGamma}_{m_0}$$

où $C$ est une constante inconnue représentant la puissance moyenne du parasite sur un axe, et où $\tilde{\varGamma}_{m_0}$ est défini par : $\tilde{\varGamma}_{m_0} = \frac{1}{2\sigma^2}\gamma_{m_0}^{var} + \frac{R}{2\sigma^2}\left(\gamma_{m_0}^{mod} + \gamma_{m_0}^{col}\right)$,
où :

• $$\gamma_{m_0}^{var} = -\sum_{\substack{p,m \\ m\neq m_0}}\left\|\tilde{Y}_{pm}\right\|^2, \gamma_{m_0}^{mod} = \left(\sum_p \alpha_{pm_0}\left\|Z_{pm_0}\right\|\right)^2 - \sum_p \alpha_{pm_0}\left\|Z_{pm_0}\right\|^2,$$

• $$\gamma_{m_0}^{col} = 2\sum_{p<q}\alpha_{pm_0}\alpha_{qm_0}\left(\left|Z_{pm_0}^*Z_{qm_0}\right| - \left\|Z_{pm_0}\right\|\left\|Z_{qm_0}\right\|\right),$$

• $R_{m_0}$ le nombre de modules de réception échantillonnées avec la fréquence $f_{m_0}$,

• $\alpha_{pm_0} = \frac{Q_{pm_0}}{R-R_{m_0}}$,

• $Q_{pm_0}$ est le nombre de modules de réception de l'antenne $p$, qui ne fonctionnent pas avec la fréquence d'échantillonnage $fe_{m_0}$,

• $Z_{pm_0} = \frac{1}{Q_{pm_0}}\sum_{m\neq m_0} Y_{pm}$, - pour les hypothèses

$H_{m_0,m_1} : \hat{\varGamma}_{m_0m_1} = R_{m_0m_1}L\ln\left(\frac{2\pi\sigma^2}{C}\right) + \tilde{\varGamma}_{m_0m_1}$ où est une constante inconnue représentant la puissance moyenne du parasite sur un axe, et où $\tilde{\varGamma}_{m_0m_1}$ est défini par :

$\tilde{\varGamma}_{m_0m_1} = \frac{1}{2\sigma^2}\gamma_{m_0m_1}^{var} + \frac{R}{2\sigma^2}\left(\gamma_{m_0m_1}^{mod} + \gamma_{m_0m_1}^{col}\right)$, Où :

$$\gamma_{m_0 m_1}^{var} = -\sum_{\substack{p,m \\ m \neq m_0, m_1}} \left\| \tilde{Y}_{pm} \right\|^2, \gamma_{m_0 m_1}^{mod} = \left( \sum_p \alpha_{pm_0 m_1} \left\| Z_{pm_0 m_1} \right\| \right)^2 -$$

$$\cdot \ \sum_p \alpha_{pm_0 m_1} \left\| Z_{pm_0 m_1} \right\|^2$$

$$\cdot \ \gamma_{m_0 m_1}^{col} = 2 \sum_{p<q} \alpha_{pm_0 m_1} \alpha_{qm_0 m_1} \left( \left| Z_{pm_0 m_1}^* Z_{qm_0 m_1} \right| - \left\| Z_{pm_0 m_1} \right\| \left\| Z_{qm_0 m_1} \right\| \right),$$

- $R_{m_0, m_1}$ est le nombre de modules de réception fonctionnant avec la fréquence $fe_{m_0}$ ou avec la fréquence $fe_{m_1}$

$$\cdot \ \alpha_{pm_0 m_1} = \frac{Q_{pm_0 m_1}}{R - R_{m_0, m_1}},$$

$$\cdot \ Z_{pm_0 m_1} = \frac{1}{Q_{pm_0 m_1}} \sum_{m \neq m_0, m_1} Y_{pm}$$

- $Q_{pm_0 m_1}$ est le nombre de modules de réception numérique rattachés à l'antenne d'indice $p$ qui ne fonctionnent ni avec la fréquence d'échantillonnage $fe_{m_0}$, ni avec la fréquence d'échantillonnage $fe_{m_1}$, et

- $\tilde{Y}_{pm}$ est l'écart d'un vecteur $Y_{pm}$ par rapport à la moyenne $Z_{pm_0 m_1}$.

**5.** Procédé de détermination de la situation de parasitage selon la revendication 1, dans lequel sur chaque module de réception numérique, une étape d'analyse spectrale par des transformées de Fourier discrètes successives, et synchrones sur tous les modules de réception numérique, des $N_m$ échantillons procurés par l'échantillonnage à la fréquence $fe_m$ pendant des intervalles de temps de durée $\Delta T$ éventuellement recouvrants, permet d'obtenir, sur chacun des $R$ modules de réception numérique, une représentation temps/fréquence appelée grille, de résolution temporelle $\Delta T$ commune à tous les modules de réception numérique, et de résolution fréquentielle $\Delta F$ commune à tous les modules de réception numérique, chaque élément de la grille étant appelé case temps/fréquence et contenant une grandeur complexe appelée mesure.

**6.** Procédé de détermination des situations de parasitage selon la revendication 1, dans lequel une étape réalise, éventuellement hors ligne, la mise en correspondance des fréquences dans la bande de réception à la résolution $\Delta F$ avec les fréquences de la bande de Nyquist de chacun des $R$ modules de réception numérique.

**7.** Procédé de détermination des situations de parasitage selon la revendication 1, dans lequel la sélection des domaines temps/fréquence est obtenue par un découpage de l'espace temps/fréquence en un ensemble de domaines temps/fréquence éventuellement recouvrants.

**8.** Interféromètre à $P$ antennes, $P$ étant un nombre entier supérieur ou égal à 1, chaque antenne étant suivie d'une chaîne de réception analogique et d'un ou plusieurs modules de réception numérique, chaque module de réception numérique comportant un système de conversion analogique-numérique et un module de traitement numérique, chaque système de conversion analogique-numérique étant associé à une fréquence d'échantillonnage respective, un système de conversion analogique-numérique étant associé à une fréquence d'échantillonnage lorsque le système de conversion analogique-numérique est propre à effectuer un échantillonnage à la fréquence d'échantillonnage, chaque fréquence étant telle que l'échantillonnage effectué par le système de conversion analogique-numérique est un échantillonnage ne respectant pas le critère de Shannon et l'interféromètre étant **caractérisé en ce que** l'interféromètre met en oeuvre un procédé selon l'une quelconque des revendications 1 à 7.

**9.** Programme d'ordinateur comprenant des instructions qui conduisent l'interféromètre selon la revendication 8 à exécuter les étapes du procédé selon l'une quelconque des revendications 1 à 7.

**10.** Support lisible par ordinateur, sur lequel est enregistré le programme d'ordinateur selon la revendication 9.

**Patentansprüche**

1. Verfahren zur Bestimmung von Störungssituationen aufgrund von Aliasing in einem digitalen Breitbandempfänger, wobei das Verfahren mit Hilfe eines Interferometers mit $P$ Antennen durchgeführt wird, wobei $P$ eine ganze Zahl größer oder gleich 1 ist, wobei auf jede Antenne eine analoge Empfangskette und mindestens ein digitales Empfangsmodul folgen, wobei die Anzahl der digitalen Empfangsmodule $R$ ist, wobei das Verfahren mindestens folgende Schritte umfasst:

   - Abtasten der von allen Empfangskanälen gelieferten Signale mit $M$ verschiedenen Abtastfrequenzen $fe_m$, die niedriger als die Nyquist-Shannon-Frequenz sind, wobei $m$ von $1$ bis $M$ reicht und $M$ eine ganze Zahl größer oder gleich 4 ist, wobei die Anzahl der digitalen Empfangsmodule, die mit einer Frequenz $f_m$ arbeiten, gleich $R_m$ ist und die Anzahl der digitalen Empfangsmodule für eine Antenne p gleich $Q_p$ ist, wobei

   $$R = \sum_{=1}^{N} R_m = \sum_{p=1}^{p} Q_p$$ , *wobei* die Abtastfrequenzen $fe_m$ ganze Zahlen von Abtastungen $N_m$ über mehrere Zeitintervalle mit einer gegebenen Dauer $\Delta T$ liefern,
   - Spektralanalyse durch aufeinanderfolgende, separate und synchrone Fourier-Transformationen, was für jedes der $R$ digitalen Empfangsmodule eine Zeit-/Frequenzdarstellung, genannt Raster, mit einer zeitlichen Auflösung $\Delta T$, und einer Frequenzauflösung $\Delta F$ ermöglicht, wobei jedes Element des Rasters als Zeit-/Frequenzfeld bezeichnet wird und eine komplexe Größe, genannt Messung, enthält,
   - Auswahl eines Satzes von Zeit-/Frequenzdomänen (im Empfangsband), wobei jede Zeit-/Frequenzdomäne in den $R$ digitalen Empfangsmodulen als $R$ überlagerbare Fenster wahrgenommen wird, wobei jedes der Fenster aus $L$ zusammenhängenden Zeit-/Frequenzfeldern besteht,
   - für jeden Zeit-/Frequenzbereich, Verkettung der in jedem der $R$ Fenster entnommenen Messungen in Form von $R$ Vektoren der Dimension $L \times 1$, die mit $Y_{pm}$ bezeichnet werden, wobei $p$ der Index des Sensors und $m$ der Index der Abtastung ist,

   **dadurch gekennzeichnet, dass** das Verfahren ferner folgenden Schritt umfasst:

   - Bestimmung des Vorhandenseins von möglichen Störern in jedem Zeit-/Frequenzbereich, bestehend aus der Bestimmung unter den folgenden Annahmen:

     • $H_0$: kein Störer,
     • $H_{m_0}$: Vorhandensein von mindestens einem Störer bei der Probenahme $m_0$, wobei $m_0 \in [1, M]$, und
     • $H_{m_0,m_1}$ : Vorhandensein von mindestens einem Störer bei der $m_0$-Abtastung und mindestens einem Störer bei der $m_1$-Abtastung, wobei $m_1 \in [1,M], m_0 \neq m_1$ und $m_0 \in [1,M]$

   aus den erhaltenen Messvektoren, wobei die Annahme eine Approximation des Logarithmus der Wahrscheinlichkeitsdichte der $R$ Messvektoren $Y_{pm}$ maximiert, wobei der Logarithmus der Wahrscheinlichkeitsdichte als Log-Wahrscheinlichkeitsdichte bezeichnet wird, wobei diese Approximation nur mit Hilfe von quadratischen Modulen, Skalarprodukten und Mittelwerten der Messungen berechenbar ist und sich ergibt aus:

     • einer Modellierung der als ungestört angenommenen Messvektoren $Y_{pm}$ durch unabhängige Stichproben einer komplexen $L$-*dimensionalen* vektoriellen Zufallsvariablen mit Gaußscher Wahrscheinlichkeitsdichte mit dem Mittelwert $Ae^{i\varphi p}$ und der Kovarianz $2\sigma^2 I_L$, wobei A der komplexe Vektor der Dimension $L$ ist, der das Nutzsignal *darstellt,* $\varphi_p$ die interferometrische Phasenverschiebung, $2\sigma^2$ die Stärke des Rauschens in einem Zeit-Frequenzfeld und $I_L$ die Identitätsmatrix der Dimension $L \times L$,
     • einer Modellierung der Messvektoren $Y_{pm}$, von denen angenommen wird, dass sie durch komplexe Vektoren der Dimension $L$ gestört werden, wobei die Komponenten dieser Vektoren unabhängige Stichproben einer zentrierten komplexen Zufallsvariable mit unabhängigen Real- und Imaginärkomponenten sind, die gleichmäßig über ein Breitenintervall $\sqrt{C}$ so verteilt sind, dass die Wahrscheinlichkeitsdichte der Messvektoren $(1/C)^L$ ist, und dann

     • einer Erhöhung der Wahrscheinlichkeitsdichte der $R$ Messvektoren $Y_{pm}$, wobei die so erhaltene Approximation gleich der Summe eines Begriffs ist, der die Rolle der Penalität für die als gestört angenommenen $Y_{pm}$ spielt und einem Begriff, der aus der Wahrscheinlichkeitsdichte der als nicht gestört angenommenen $Y_{pm}$ stammt, wobei die gewählte Annahme lautet:

• $H_0$, wenn seine angenäherte Log-Wahrscheinlichkeitsdichte jene ist, deren Übereinstimmung mit seiner angenommenen Gaußschen Gesetzmäßigkeit maximal ist,
• ansonsten, $H_{m_0}$ wenn seine auf ungestörte Kanäle beschränkte angenäherte Log-Wahrscheinlichkeitsdichte jene ist, deren Übereinstimmung mit seiner angenommenen Gaußschen Gesetzmäßigkeit maximal ist,
• ansonsten, $H_{m_0,m_1}$ wenn seine auf ungestörte Kanäle beschränkte angenäherte Log-Wahrscheinlichkeitsdichte jene ist, deren Übereinstimmung mit seiner angenommenen Gaußschen Gesetzmäßigkeit maximal ist,

2. Verfahren zur Bestimmung der Störungssituation nach Anspruch 1, bei dem mindestens eines der folgenden Kriterien berechnet wird:

- ein Kriterium für die Nichtveränderlichkeit der $Y_{pm}$ in Bezug auf ihren gefilterten Wert über die verschiedenen spezifischen Abtastfrequenzen der $p$-Antenne
- ein Kriterium für die Gleichheit der Module der gefilterten $Y_{pm}$ über die verschiedenen spezifischen Abtastfrequenzen der p-Antenne, und
- ein Kriterium für die Kollinearität der gefilterten $Y_{pm}$ über die verschiedenen Abtastfrequenzen der p-Antenne.

3. Verfahren zur Bestimmung der Störsituation nach Anspruch 2 wobei das berechnete Kriterium bzw. die berechneten Kriterien verwendet werden, um eine Annäherung an die Log-Wahrscheinlichkeitsdichte der Messungen zu erlangen.

4. Verfahren zur Bestimmung der Störsituation nach einem der Ansprüche 1 bis 3, wobei die angenäherte Log-Wahrscheinlichkeitsdichte nach den folgenden Näherungen berechnet wird:
für die Annahme $H_0$:

$$\hat{\Gamma}_0 = \frac{1}{2\sigma^2}\gamma_0^{var} + \frac{R}{2\sigma^2}\left(\gamma_0^{mod} + \gamma_0^{col}\right)$$

wobei:

•

$$\gamma_0^{var} = -\sum_{p,m}\left\|\tilde{Y}_{pm}\right\|^2, \gamma_0^{mod} = \left(\sum_p \alpha_p \left\|Z_p\right\|\right)^2 - \sum_p \alpha_p \left\|Z_p\right\|^2, \gamma_0^{col} =$$
$$2\sum_{p<q}\alpha_p\,\alpha_q\left(\left|Z_p^{\star}Z_q\right| - \left\|Z_p\right\|\left\|Z_q\right\|\right),$$
$$\alpha_p = \frac{Q_p}{R}$$

• $Z_p$ ist der Mittelwert der Vektoren $Y_{pm}$ auf den zugehörigen Empfangsmodulen zu einer gleichen Antenne $p$: $Z_p = \frac{1}{Q_p}\sum_{pm}Y_{pm}$, und
• $\tilde{Y}_{pm}$ ist die Abweichung eines Vektors $Y_{pm}$ vom Mittelwert $Z_p$;
für die Annahmen $H_{m_0}$:

$$\hat{\Gamma}_{m_0} = R_{m_0}L\ln\left(\frac{2\pi\sigma^2}{C}\right) + \tilde{\Gamma}_{m_0}$$

wobei C eine unbekannte Konstante ist, die die durchschnittliche Leistung des Störers auf einer Achse darstellt, und

wobei $\tilde{\Gamma}_{m_0}$ definiert ist durch: $\tilde{\Gamma}_{m_0} = \frac{1}{2\sigma^2}\gamma_{m_0}^{var} + \frac{R}{2\sigma^2}\left(\gamma_{m_0}^{mod} + \gamma_{m_0}^{col}\right)$

wobei:

• $\gamma_{m_0}^{var} = -\sum_{\substack{p,m \\ m\neq m_0}}\left\|\tilde{Y}_{pm}\right\|^2, \gamma_{m_0}^{mod} = \left(\sum_p \alpha_{pm_0}\left\|Z_{pm_0}\right\|\right)^2 - \sum_p \alpha_{pm_0}\left\|Z_{pm_0}\right\|^2,$

$$\gamma_{m_0}^{col} = 2 \sum_{p<q} \alpha_{pm_0} \alpha_{qm_0} \left( \left| Z_{pm_0}^* Z_{qm_0} \right| - \left\| Z_{pm_0} \right\| \left\| Z_{qm_0} \right\| \right),$$

- $R_{m_0}$ die Anzahl der mit der Frequenz abgetasteten Empfangsmodule $f_{m_0}$

$$\alpha_{pm_0} = \frac{Q_{pm_0}}{R - R_{m_0}},$$

- $Q_{pm_0}$ ist die Anzahl der Empfangsmodule der p-Antenne ist, die nicht mit der Abtastfrequenz $fe_{m_0}$ funktionieren,

$$Z_{pm_0} = \frac{1}{Q_{pm_0}} \sum_{m \neq m_0} Y_{pm},$$ für die Annahmen

$H_{m_0,m_1} : \hat{\Gamma}_{m_0 m_1} = R_{m_0 m_1} L \ln\left(\frac{2\pi\sigma^2}{C}\right) + \tilde{\Gamma}_{m_0 m_1}$ wobei es eine unbekannte Konstante gibt, die die durchschnittliche Leistung des Störers auf einer Achse darstellt, und wobei $\tilde{\Gamma}_{m_0 m_1}$ definiert ist durch:

$$\tilde{\Gamma}_{m_0 m_1} = \frac{1}{2\sigma^2} \gamma_{m_0 m_1}^{var} + \frac{R}{2\sigma^2} \left( \gamma_{m_0 m_1}^{mod} + \gamma_{m_0 m_1}^{col} \right),$$

wobei:

$$\gamma_{m_0 m_1}^{var} = - \sum_{\substack{p,m \\ m \neq m_0, m_1}} \left\| \tilde{Y}_{pm} \right\|^2, \gamma_{m_0 m_1}^{mod} = \left( \sum_p \alpha_{pm_0 m_1} \left\| Z_{pm_0 m_1} \right\| \right)^2 - $$

$$\sum_p \alpha_{pm_0 m_1} \left\| Z_{pm_0 m_1} \right\|^2,$$

$$- \gamma_{m_0 m_1}^{col} = 2 \sum_{p<q} \alpha_{pm_0 m_1} \alpha_{qm_0 m_1} \left( \left| Z_{pm_0 m_1}^* Z_{qm_0 m_1} \right| - \left\| Z_{pm_0 m_1} \right\| \left\| Z_{qm_0 m_1} \right\| \right),$$

- $R_{m_0.m_1}$ die Anzahl der Empfangsmodule ist, die mit der $fe_{m_0}$ Frequenz oder mit der $fe_{m_1}$ Frequenz arbeiten

$$\alpha_{pm_0 m_1} = \frac{Q_{pm_0 m_1}}{R - R_{m_0,m_1}},$$

$$Z_{pm_0 m_1} = \frac{1}{Q_{pm_0 m_1}} \sum_{m \neq m_0, m_1} Y_{pm},$$

- $Q_{pm_0 m_1}$ die Anzahl der digitalen Empfangsmodule ist, die an die Antenne mit dem Index p angehängt sind, die weder mit der $fe_{m_0}$ Abtastfrequenz, noch mit der Abtastfrequenz $fe_{m_1}$ arbeiten, und
- $\tilde{Y}_{pm}$ ist die Abweichung eines Vektors $Y_{pm}$ vom Mittelwert. $Z_{pm_0 m_1}$

5. Verfahren zur Bestimmung der Störungssituation nach Anspruch 1, bei dem auf jedem digitalen Empfangsmodul ein Schritt der Spektralanalyse durch diskrete aufeinander folgende Fourier-Transformationen synchron auf allen digitalen Empfangsmodulen, der $N_m$-Abtastwerte, die durch die Abtastung mit der Frequenz $fe_m$ während Zeitintervallen mit der Dauer $\Delta T$ erhalten wurden, die eventuell überlappend sind, ermöglichen auf jedem der R digitalen Empfangsmodule eine Zeit-/Frequenzdarstellung, die als Raster bezeichnet wird, mit einer zeitlichen Auflösung $\Delta T$, die allen digitalen Empfangsmodulen gemeinsam ist und mit einer allen digitalen Empfangsmodulen gemeinsamen Frequenzauflösung $\Delta F$, wobei jedes Element des Rasters als Zeit/Frequenzfeld bezeichnet wird und eine komplexe Größe enthält, die als Messung bezeichnet wird.

6. Verfahren zur Bestimmung von Störsituationen nach Anspruch 1, wobei ein Schritt, gegebenenfalls offline, die Abbildung der Frequenzen im Empfangsband mit der Auflösung $\Delta F$ auf die Frequenzen im Nyquist-Band jedes der R digitalen *Empfangsmodule* durchführt.

7. Verfahren zur Bestimmung von Störsituationen nach Anspruch 1, bei dem die Auswahl der Zeit-/Frequenzbereiche durch eine Aufteilung des Zeit-/Frequenzraums in eine Menge von möglicherweise überlappenden Zeit-/Frequenzbereichen erreicht wird.

8. Interferometer mit *P* Antennen, wobei *P eine* ganze Zahl größer oder gleich 1 ist, wobei jeder Antenne eine analoge Empfangskette und ein oder mehrere digitale Empfangsmodule nachgeschaltet sind, wobei jedes digitale Empfangsmodul ein Analog-Digital-Wandlungssystem und ein digitales Verarbeitungsmodul umfasst, wobei jedes Analog-Digital-Wandlungssystem einer jeweiligen Abtastfrequenz zugeordnet ist, wobei ein Analog-Digital-Wandlungssystem einer Abtastfrequenz zugeordnet ist, wenn das Analog-Digital-Wandlungssystem dazu geeignet ist, eine Abtastung bei der Abtastfrequenz durchzuführen, wobei jede Frequenz derart ist, dass die von dem System durchgeführte Abtastung durch das Analog-Digital-Wandlungssystem eine Abtastung ist, die das Shannon-Kriterium nicht erfüllt, und wobei das Interferometer **dadurch gekennzeichnet ist, dass** das Interferometer ein Verfahren nach einem der Ansprüche 1 bis 7 durchführt.

9. Computerprogramm, das Anweisungen umfasst, die das Interferometer nach Anspruch 8 dazu veranlassen, die Schritte des Verfahrens nach einem der Ansprüche 1 bis 7 auszuführen.

10. Computerlesbares Medium, auf dem das Computerprogramm nach Anspruch 9 gespeichert ist.

**Claims**

1. Method for determining parasitization situations due to spectral aliasing in a wideband digital receiver, the method being implemented by means of an interferometer with $P$ antennas, $P$ being an integer greater than or equal to 1, each antenna being followed by an analog reception channel and at least one digital reception module, the number of digital reception modules being $R$, the method comprising at least one step of:

   - sampling of the signals delivered by the set of reception chains, using $M$ different sampling frequencies $fe_m$ below the Nyquist-Shannon frequency, $m$ ranging from 1 to $M$, and $M$ being an integer greater than or equal to 4; the number of digital reception modules operating with a frequency $f_m$ being equal to $R_m$, and the number of digital reception modules for an antenna $p$ being $Q_p$, with $R = \sum_{m=1}^{N} R_m = \sum_{p=1}^{P} Q_p$ , said $fe_m$ sampling frequencies providing whole numbers of $N_m$ samples over a given time $\Delta T$,

   - spectral analysis by successive discrete and synchronous Fourier transforms, allowing, on each of the $R$ digital reception modules, a time/frequency representation called a grid, of temporal resolution $\Delta T$, and of frequency resolution $\Delta F$, each element of the grid being called a time/frequency box and containing a complex quantity called a measurement,

   - selection of a set of time/frequency domains (in the reception band), each time/frequency domain being perceived in the $R$ digital reception modules as $R$ stackable windows, each of the windows being composed of $L$ associated time/frequency boxes,

   - for each time/frequency domain, concatenation of the measurements taken from each of the $R$ windows in the form of $R$ dimension vectors $Lx1$ denoted $Y_{pm}$, where $p$ is the sensor index and m is the sampling index,

   the method being **characterized in that** the method further comprises a step of:

   - determination of the presence of possible parasites on each time/frequency domain, consisting in determining among the following hypotheses:

      • $H_0$ : absence of parasite,
      • $H_{m_0}$: presence of at least one parasite on sampling $m_0$, with $m_0 \in [1, M]$, and
      • $H_{m_0,m_1}$ presence of at least one parasite on the sampling $m_0$ and at least one parasite on the sampling $m_1$ with $m_1 \in [1, M], m_0 \neq m_1$) and $m_0 \in [1, M]$.

   from the vectors of measurements obtained, the hypothesis maximizing an approximation of the probability log-density of the $R$ measurement vectors $Y_{pm}$, the hypothesis only being calculated by means of square moduli, scalar products and the means of measurements, this approximation resulting from :

      - a modeling of the measurement vectors $Y_{pm}$ assumed to be not parasitized by independent samples of a complex vector random variable of dimension L, mean Gaussian probability density $Ae^{i\varphi_p}$ and covariance $2\sigma^2 I_L$, where A is the complex vector of dimension L representing the wanted signal, $\varphi_p$ the interferometric phase shift, $2\sigma^2$ the noise power in a time/frequency cell, and $I_L$ the identity matrix of dimension $L \times L$ ,

- a modeling of the measurement vectors $Y_{pm}$ assumed to be parasitized (interference) by complex vectors of dimension $L$, where the components of these vectors are independent samples of a centred complex random variable with independent real and imaginary components that are uniformly distributed over a width interval $\sqrt{C}$ so that the probability density of the vectors of measurements will be $(1/C)^L$, then
- an increase in the probability density of the $R$ measurement vectors $Y_{pm}$;

the approximation thus obtained being equal to the sum of a term acting as a penalty for the $Y_{pm}$ assumed to be parasitized, and a term derived from the probability density of the $Y_{pm}$ assumed to be not parasitized, the chosen hypothesis being

- $H_0$ if its approximate log-density is that whose adequacy to its supposed Gaussian law is maximum,
- otherwise $H_1$ if its approximate log-density restricted to non-parasitized pathways is that whose adequacy to its supposed Gaussian law is maximum,
- otherwise $H_2$ if its approximate log-density restricted to non-parasitized pathways is that whose adequacy to its supposed Gaussian law is maximum.

2. Method for determining the parasitization situation according to claim 1, wherein at least one of the following criteria is calculated:

- a non-variability criterion of $Y_{pm}$ with respect to their filtered value on the different sampling frequencies specific to the antenna $p$
- an equality criterion of the filtered modules of $Y_{pm}$ on the different sampling frequencies specific to the antenna $p$, and
- a co-linearity criterion of the $Y_{pm}$ filtered on the different sampling frequencies of the antenna p.

3. Method for determining the interference situation according to claim 2, wherein the one or more calculated criteria are used to obtain an approximation of the probability log-density of the measurements.

4. Method for determining the parasitization situation according to any one of claims 1 to 3, wherein the approximate probability log-density is calculated according to the following approximations: for the hypothesis $H_0$:

$$\hat{\Gamma}_0 = \frac{1}{2\sigma^2}\gamma_0^{var} + \frac{R}{2\sigma^2}\left(\gamma_0^{mod} + \gamma_0^{col}\right)$$

where

•

$$\gamma_0^{var} = -\sum_{p,m}\left\|\tilde{Y}_{pm}\right\|^2, \gamma_0^{mod} = \left(\sum_p \alpha_p\left\|Z_p\right\|\right)^2 - \sum_p \alpha_p\left\|Z_p\right\|^2, \gamma_0^{col} =$$
$$2\sum_{p<q}\alpha_p\,\alpha_q\left(\left|Z_p^* Z_q\right| - \left\|Z_p\right\|\left\|Z_q\right\|\right),$$

• $\alpha_p = \frac{Q_p}{R}$,

• $Z_p$ is the average of the vectors $Y_{pm}$ on the reception modules associated with the same antenna $p : Z_p = \frac{1}{Q_p}\sum_m Y_{pm}$, and

• $\tilde{Y}_{pm}$ is the deviation of a vector $Y_{pm}$ from the mean $Z_p$ for the hypotheses $H_{m_0}$

$$\hat{\Gamma}_{m_0} = R_{m_0}L\ln\left(\frac{2\pi\sigma^2}{C}\right) + \tilde{\Gamma}_{m_0}$$

where $C$ is an unknown constant representing the mean power of the parasitization on an axis, and

where $\tilde{\Gamma}_{m_0}$ is defined by $\tilde{\Gamma}_{m_0} = \frac{1}{2\sigma^2}\gamma_{m_0}^{var} + \frac{R}{2\sigma^2}\left(\gamma_{m_0}^{mod} + \gamma_{m_0}^{col}\right)$,

where:

$$\gamma_{m_0}^{var} = -\sum_{\substack{p,m \\ m \neq m_0}} \left\|\tilde{Y}_{pm}\right\|^2, \gamma_{m_0}^{mod} = \left(\sum_p \alpha_{pm_0}\left\|Z_{pm_0}\right\|\right)^2 - \sum_p \alpha_{pm_0}\left\|Z_{pm_0}\right\|^2,$$

$$\gamma_{m_0}^{col} = 2\sum_{p<q}\alpha_{pm_0}\alpha_{qm_0}\left(\left|Z_{pm_0}^* Z_{qm_0}\right| - \left\|Z_{pm_0}\right\|\left\|Z_{qm_0}\right\|\right),$$

- $R_{m_0}$ the number of receiving modules sampled with the frequency $f_{m0}$

$$\alpha_{pm_0} = \frac{Q_{pm_0}}{R - R_{m_0}},$$

- $Q_{pm_0}$ is the number of $p$ antenna receiving modules, which do not work with the sampling frequency $f_{em0}$,

$$Z_{pm_0} = \frac{1}{Q_{pm_0}}\sum_{m \neq m_0} Y_{pm},$$

- for the hypotheses $H_{m_0,m_1} : \hat{\Gamma}_{m_0 m_1} = R_{m_0 m_1} L \ln\left(\frac{2\pi\sigma^2}{C}\right) + \tilde{\Gamma}_{m_0 m_1}$ : where is an unknown constant representing the mean power of the parasitization on an axis, and where $\tilde{\Gamma}_{m_0 m_1}$ is defined by

$$\tilde{\Gamma}_{m_0 m_1} = \frac{1}{2\sigma^2}\gamma_{m_0 m_1}^{var} + \frac{R}{2\sigma^2}\left(\gamma_{m_0 m_1}^{mod} + \gamma_{m_0 m_1}^{col}\right),$$

where:

$$\gamma_{m_0 m_1}^{var} = -\sum_{\substack{p,m \\ m \neq m_0, m_1}} \left\|\tilde{Y}_{pm}\right\|^2, \gamma_{m_0 m_1}^{mod} = \left(\sum_p \alpha_{pm_0 m_1}\left\|Z_{pm_0 m_1}\right\|\right)^2 -$$

$$\sum_p \alpha_{pm_0 m_1}\left\|Z_{pm_0 m_1}\right\|^2,$$

$$\gamma_{m_0 m_1}^{col} = 2\sum_{p<q}\alpha_{pm_0 m_1}\alpha_{qm_0 m_1}\left(\left|Z_{pm_0 m_1}^* Z_{qm_0 m_1}\right| - \left\|Z_{pm_0 m_1}\right\|\left\|Z_{qm_0 m_1}\right\|\right),$$

- $R_{m_0,m_1}$ is the number of reception modules operating with frequency $fe_{m_0}$ or frequency $fe_{m_1}$

$$\alpha_{pm_0 m_1} = \frac{Q_{pm_0 m_1}}{R - R_{m_0,m_1}},$$

$$Z_{pm_0 m_1} = \frac{1}{Q_{pm_0 m_1}}\sum_{m \neq m_0, m_1} Y_{pm},$$

- $Q_{pm_0 m_1}$ is the number of digital reception modules attached to the antenna index p that do not operate with either the sampling frequency $f_{em0}$, or the sampling frequency $f_{em1}$, and
- $\tilde{Y}_{pm}$ is the deviation of a vector $Y_{pm}$ from the mean $Z_{pm_0 m_1}$.

5. Method for determining the parasitization situation according to claim 1, wherein on each digital reception module, a step of spectral analysis by successive discrete and synchronous Fourier transforms, on all the digital reception modules, of the $N_m$ samples. provided by the frequency sampling $fe_m$ during possibly overlapping time intervals $\Delta T$, makes it possible to obtain, on each of the $R$ digital reception modules, a time/frequency representation called a grid, of temporal resolution $\Delta T$ common to all the digital reception modules, and frequency resolution $\Delta F$ common to all digital reception modules, each element of the grid being called a time/frequency box and containing a complex quantity called a measurement.

6. Method for determining parasitization situations according to claim 1, wherein a step obtains, possibly off-line, the matching of the frequencies in the reception band at the resolution $\Delta F$ with the frequencies of the Nyquist band of each of the $R$ digital reception modules.

7. Method for determining parasitization situations according to claim 1, wherein the selection of the time/frequency domains is obtained by a division of the time/frequency space into a set of possibly overlapping time/frequency domains.

8. Interferometer with $P$ antennas, $P$ being an integer greater than or equal to 1, each antenna being followed by an analog reception channel and one or more digital reception modules, each digital reception module comprising an analog-to-digital conversion system. a digital processing module, each analog-to-digital conversion system being associated with a respective sampling frequency, an analog-to-digital converter system being associated with a sampling frequency when the analog-to-digital conversion system is able to sample at the sampling frequency, each frequency being such that the sampling carried out by the analog-to-digital conversion system is sampling that does not comply with the Shannon criterion and wherein the interferometer is **characterized in that** the interferometer implements a method according to any one of claims 1 to 7.

9. Computer program comprising instructions, which cause the interferometer of claims 8 to the implement a method according to any one of claims 1 to 7.

10. Readable information support on which is stored a computer program according to claim 9.

Spectre (seule
l'amplitude est
représentée)

axe des fréquences

0    $f_e$    $2f_e$    $3f_e$  $f_1$    $4f_e$  $f_2$

bande de réception

première zone
de Nyquist

EP 3 671 250 B1

FIG.1

FIG.2

Grille temps-fréquence G $_{p,m}$

i indice de temps

Case temps-fréquence i,j

j indice de fréquence

# FIG.3

Grille temps-fréquence G $_{p,m}$

i indice de temps

Signal réparti dans
plusieurs cases temps-
fréquence contiguës

j indice de fréquence

# FIG.4

Grille temps-fréquence $G_{p,m_2}$

i indice de temps

j indice de fréquence

Spectre (seule l'amplitude est représentée)

Grille temps-fréquence $G_{p,m_1}$

i indice de temps

j indice de fréquence

axe des fréquences

0     $f_{e,m_1}$   $f_{e,m_2}$         $2f_{e,m_1}$   $2f_{e,m_2}$     f

bande de réception

premières zones de Nyquist

**FIG.5**

## FIG.6

EP 3 671 250 B1

EP 3 671 250 B1

Antenne    Antenne    Antenne    Antenne

CAN    CAN    CAN    CAN

Analyse spectrale    Analyse spectrale    Analyse spectrale    Analyse spectrale

Extraction des fenêtres
Vectorisation    Extraction des fenêtres
Vectorisation    Extraction des fenêtres
Vectorisation    Extraction des fenêtres
Vectorisation

Sur chaque
zone d'analyse

Calcul des critères partiels de variabilité par rapport à la moyenne,
d'égalité des modules, de colinéarité

Pondération des critères partiels

Décision

Elimination des fréquences d'échantillonnage parasitées

Détection sur les fréquences d'échantillonnage non parasitées

FIG.7

## RÉFÉRENCES CITÉES DANS LA DESCRIPTION

**Documents brevets cités dans la description**

• FR 3020157